# EUROPEAN PATENT SPECIFICATION

(11) **EP 4 176 680 B1**
(45) Date of publication and mention of the grant of the patent: **01.04.2026**
(21) Application number: 21758511.6
(22) Date of filing: 29.07.2021
(51) Int. Cl.: H04W 76/20, H04W 76/40

(54) **MANAGING UNICAST, MULTICAST AND BROADCAST COMMUNICATION**
VERWALTUNG VON UNICAST-, MULTICAST- UND BROADCASTKOMMUNIKATION
GESTION DE COMMUNICATION DE DIFFUSION INDIVIDUELLE, DE MULTIDIFFUSION ET DE DIFFUSION

(30) Priority: 06.08.2020 US 202063062024 P
(43) Date of publication of application: 10.05.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2021/043595
(87) International publication number: WO 2022/031500

(56) References cited:
- HUAWEI: "(TP to TS 38.401 BL CR) Decision on PTP and PTM", vol. RAN WG3, no. E-meeting; 20210125 - 20210205, 15 January 2021 (2021-01-15), XP051975009, Retrieved from the Internet <URL:https://ftp.3gpp.org/tsg_ran/WG3_Iu/TSGR3_111-e/Docs/R3-210276.zip R3-210276 (TP to TS 38401) Decission on PTP and PTM.docx> [retrieved on 20210115]
- VIVO ET AL: "Solution for unicast switch to multicast based on network control", vol. SA WG2, no. Seoul, Korea; 20200113 - 20200117, 13 January 2020 (2020-01-13), XP051844100, Retrieved from the Internet <URL:https://ftp.3gpp.org/tsg_sa/WG2_Arch/TSGS2_136AH_Incheon/Docs/S2-2001358.zip S2-2001358-[5MBS]-Solution for unicast switch to multicast based on network control-v2.doc> [retrieved on 20200113]
- ERICSSON: "Key Issue Optimized radio resource for MBS service and Solution", vol. SA WG2, no. Incheon, KR; 20200113 - 20200117, 7 January 2020 (2020-01-07), XP051842515, Retrieved from the Internet <URL:https://ftp.3gpp.org/tsg_sa/WG2_Arch/TSGS2_136AH_Incheon/Docs/S2-2000448.zip S2-2000448_23757_5MBS_newKI_optRadioResource_Jan7.doc> [retrieved on 20200107]
- MIKKO S\"AILY ET AL: "5G Radio Access Network Architecture for Terrestrial Broadcast Services", ARXIV.ORG, CORNELL UNIVERSITY LIBRARY, 201 OLIN LIBRARY CORNELL UNIVERSITY ITHACA, NY 14853, 7 April 2020 (2020-04-07), XP081639220

## Description

### FIELD OF THE DISCLOSURE

This disclosure relates to wireless communications and, more particularly, to managing unicast, broadcast, and multicast services.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In telecommunication systems, the Packet Data Convergence Protocol (PDCP) sublayer of the radio protocol stack provides services such as transfer of user-plane data, ciphering, integrity protection, etc. For example, the PDCP layer defined for the Evolved Universal Terrestrial Radio Access (EUTRA) radio interface (see 3GPP specification TS 36.323) and New Radio (NR) (see 3GPP specification TS 38.323) provides sequencing of protocol data units (PDUs) in the uplink direction (from a user device, also known as a user equipment (UE), to a base station) as well as in the downlink direction (from the base station to the UE). Further, the PDCP sublayer provides services for signaling radio bearers (SRBs) to the Radio Resource Control (RRC) sublayer. The PDCP sublayer also provides services for data radio bearers (DRBs) to a Service Data Adaptation Protocol (SDAP) sublayer or a protocol layer such as an Internet Protocol (IP) layer, an Ethernet protocol layer, and an Internet Control Message Protocol (ICMP) layer. Generally speaking, the UE and a base station can use SRBs to exchange RRC messages as well as non-access stratum (NAS) messages, and can use DRBs to transport data on a user plane.

The UE in some scenarios can concurrently utilize resources of multiple nodes (*e.g.,* base stations or components of a distributed base station or disaggregated base station) of a radio access network (RAN), interconnected by a backhaul. When these network nodes support different radio access technologies (RATs), this type of connectivity is referred to as Multi-Radio Dual Connectivity (MR-DC). When operating in MR-DC, the cell(s) associated with the base station operating as a master node (MN) define a master cell group (MCG), and the cells associated with the base station operating as a secondary node (SN) define the secondary cell group (SCG). The MCG covers a primary cell (PCell) and zero, one, or more secondary cells (SCells), and the SCG covers a primary secondary cell (PSCell) and zero, one, or more SCells. The UE communicates with the MN (via the MCG) and the SN (via the SCG). In other scenarios, the UE utilizes resources of one base station at a time, *i.e.,* single connectivity (SC). The UE in SC only communicates with the MN (via the MCG). One base station and/or the UE determines that the UE should establish a radio connection with another base station. For example, one base station can determine to hand the UE over to the second base station, and initiate a handover procedure. The UE in other scenarios can concurrently utilize resources of a RAN node (*e.g.,* a single base station or a component of a distributed base station or a disaggregated base station), interconnected by a backhaul.

UEs can use several types of SRBs and DRBs. So-called SRB1 resources carry RRC messages, which in some cases include NAS messages over the dedicated control channel (DCCH), and SRB2 resources support RRC messages that include logged measurement information or NAS messages, also over the DCCH but with lower priority than SRB1 resources. More generally, SRB1 and SRB2 resources allow the UE and the MN to exchange RRC messages related to the MN and embed RRC messages related to the SN, and also can be referred to as MCG SRBs. SRB3 resources allow the UE and the SN to exchange RRC messages related to the SN, and can be referred to as SCG SRBs. Split SRBs allow the UE to exchange RRC messages directly with the MN via lower layer resources of the MN and the SN. Further, DRBs terminated at the MN and using the lower-layer resources of only the MN can be referred as MCG DRBs, DRBs terminated at the SN and using the lower-layer resources of only the SN can be referred as SCG DRBs, and DRBs terminated at the MCG but using the lower-layer resources of the MN, the SN, or both the MN and the SN can be referred to as split DRBs.

UEs can perform handover procedures to switch from one cell to another, whether in single connectivity (SC) or DC operation. These procedures involve messaging (e.g., RRC signaling and preparation) among RAN nodes and the UE. The UE may handover from a cell of a serving base station to a target cell of a target base station, or from a cell of a first distributed unit (DU) of a serving base station to a target cell of a second DU of the same base station, depending on the scenario. In DC scenarios, UEs can perform PSCell change procedures to change PSCells. These procedures involve messaging (e.g., RRC signaling and preparation) among RAN nodes and the UE. The UE may perform PSCell change from a PSCell of a serving SN to a target PSCell of a target SN, or from a PSCell of a source DU of a base station to a PSCell of a target DU of the same base station, depending on the scenario.

Base stations that operate according to fifth-generation (5G) New Radio (NR) requirements support significantly larger bandwidth than fourth-generation (4G) base stations. Accordingly, the Third Generation Partnership Project (3GPP) has proposed that for Release 15, user equipment units (UEs) support a 100 MHz bandwidth in frequency range 1 (FR1) and a 400 MHz bandwidth in frequency range (FR2). Due to the relatively wide bandwidth of a typical carrier, 3GPP has proposed that for Release 17, a 5G NR base station can provide multicast and/or broadcast services (MBS, also known as MBMS for "multimedia broadcast multicast service") to UEs that can be useful in many content delivery applications, such as transparent IPv4/IPv6 multicast delivery, IPTV, software delivery over wireless, group communications and IoT applications, V2X applications, emergency messages related to public safety, to name a few.

However, in some cases, a UE may be preconfigured to utilize all of its hardware components to receive non-MBS information (*i.e.,* unicast exchange with the RAN) when in connected state with the RAN. The UE in these cases is unable to receive MBS because no other hardware component is available. In other cases, the UE may be preconfigured to utilize some of its hardware components to receive MBS on a specified frequency when in connected state with the RAN. However, the UE then is unable to receive MBS on a desired frequency that is different than the one specified.

Ericsson, "Key issue Optimized radio resource for MBS service and Solution (3GPP S2-2000448) aims at providing support for optimized radio resource in the 5GS, that is, radio resource for MBS is only allocated if there is a UE interested in a specific MBS service, and the radio resource is released (or not allocated) if no UE is interested in the MBS service.

VIVO ET AL, "Solution for unicast switch to multicast based on network control" (3GPP S2-2001358), 13 January 2020 (2020-01-13) discloses a method for reliably switch from unicast to multicast services.

### SUMMARY

In accordance with the invention, there is provided: a method performed by a first node operating in a RAN, as recited by claim 1; a RAN node, as recited by claim 10; a method performed by a UE, as recited by claim 11; and a UE, as recited by claim 15.

Generally speaking, a UE and/or one or more base stations operating in a RAN implement the techniques of this disclosure to prepare the UE to simultaneously receive MBS and non-MBS (*i.e.,* unicast) information (*e.g.,* control information, data, etc.) from the RAN. The UE can provide an MBS interest indication to the RAN, so that the RAN can provide a configuration to the UE based on the MBS interest indication. In some implementations, the UE can indicate, in the MBS interest indication, a particular desired frequency on which to receive MBS, so that the RAN can consider the desired frequency to configure the UE to receive MBS on the desired frequency. These techniques can also be applied when the UE performs handover procedures or PSCell change procedures with the RAN, so that the UE is prepared to simultaneously receive MBS and unicast information from the RAN upon completion of such procedures.

### BRIEF DESCRIPTION OF THE DRAWINGS

Fig. 1A is a block diagram of an example communication system in which a RAN configures a UE to simultaneously receive MBS and unicast information from the RAN;
Fig. 1B is a block diagram of an example base station in which a centralized unit (CU) and a DU can operate in the system of Fig. 1A;
Fig. 2 is a block diagram of an example protocol stack, according to which a UE of Fig. 1A can communicate with the RAN of Fig. 1A;
Fig. 3A is a messaging diagram of an example scenario in which a CU of Fig. 1B sends an interface message including an MBS interest indication to a DU, for the DU to generate a configuration for the UE to receive MBS in view of the MBS interest indication;
Fig. 3B is a messaging diagram of an example scenario in which a CU of Fig. 1B sends an interface message in view of an MBS interest indication to a DU, for the DU to generate a configuration for the UE to receive MBS;
Fig. 3C is a messaging diagram of an example scenario in which a DU of Fig. 1B generates a configuration, in view of an MBS interest indication, for the UE to receive MBS;
Fig. 3D is a messaging diagram of an example scenario in which a CU of Fig. 1B sends a measurement configuration in view of an MBS interest indication to a DU, for the DU to generate a configuration for the UE to receive MBS;
Fig. 4A is a messaging diagram of an example scenario in which a base station of Fig. 1A configures a UE to receive MBS while performing a handover or PSCell change procedure with the UE;
Fig. 4B is a messaging diagram of an example scenario in which a base station of Fig. 1A configures a UE to receive MBS after performing a handover or PSCell change procedure with the UE;
Fig. 5A is a messaging diagram of an example scenario in which a base station of Fig. 1A configures a UE to receive MBS while performing a handover procedure with the UE;
Fig. 5B is a messaging diagram of an example scenario in which a base station of Fig. 1A configures a UE to receive MBS after performing a handover procedure with the UE;
Fig. 6 is a messaging diagram of an example scenario in which a CU of Fig. 1B sends an MBS interest indication to either a first DU or a second DU;
Fig. 7 is a messaging diagram of an example scenario in which a CU of an MN sends an MBS interest indication to an SN or a DU of the MN;
Fig. 8 is a flow diagram of an example method for generating a DU configuration for a UE in response to receiving an MBS interest indication from the UE, which can be implemented in the base station of Fig. 1B;
Fig. 9A is a flow diagram of an example method, which can be implemented in a CU of a base station of Fig. 1B, for handling an MBS interest indication of a UE with a DU of the same base station or of a different base station;
Fig. 9B is a flow diagram of an example method, which can be implemented in a CU of a base station of Fig. 1B, for handling an MBS interest indication of a UE with a first DU or a second DU of the same base station;
Fig. 10 is a flow diagram of an example method for providing an MBS interest indication conveying a carrier frequency of a RAT on which the UE is interested in receiving MBS to a base station, which can be implemented in a UE of Fig. 1A;
Fig. 11 is a flow diagram of an example method for processing an MBS interest indication, which can be implemented in a base station of Fig. 1A;
Fig. 12 is a flow diagram of an example method for processing an MBS interest indication, which can be implemented in a base station of Fig. 1B;
Fig. 13 is a flow diagram of an example method for processing an MBS interest indication, which may be implemented by an MN of Fig. 1A;
Fig. 14 is a flow diagram of an example method for configuring a UE to measure a carrier frequency indicated in an MBS interest indication, which may be implemented by a base station of Fig. 1A;
Fig. 15 is a flow diagram of an example method for processing an MBS interest indication, which can be implemented in a first node of Fig. 1B; and
Fig. 16 is a flow diagram of an example method for providing an MBS interest indication to a network node, which can be implemented in a UE of Fig. 1A.

### DETAILED DESCRIPTION OF THE DRAWINGS

A UE, which may already be configured to receive non-MBS from a RAN, can transmit an MBS interest indication to the RAN, so that the RAN can (re)configure the UE to receive MBS. In some implementations and scenarios, by transmitting the MBS interest indication to the RAN, a UE can convey to the RAN that the UE is interested in receiving (or attempting to receive) MBS, but not yet configured to receive MBS. In other implementations and scenarios, the MBS interest indication can convey that the UE is configured to receive MBS on a certain frequency carrier (*e.g.,* of a first RAT) but not on another desired frequency carrier (*e.g.,* of a second RAT), to indicate that the UE is only able to receive or is currently receiving MBS on the configured carrier frequency but not on the desired carrier frequency. Generally speaking, the techniques of this disclosure allow the RAN, particularly a first RAN node and a second RAN node, to coordinate in processing the MBS interest indication of a UE in various scenarios, to appropriately (re)configure the existing hardware of the UE to receive both non-MBS and MBS.

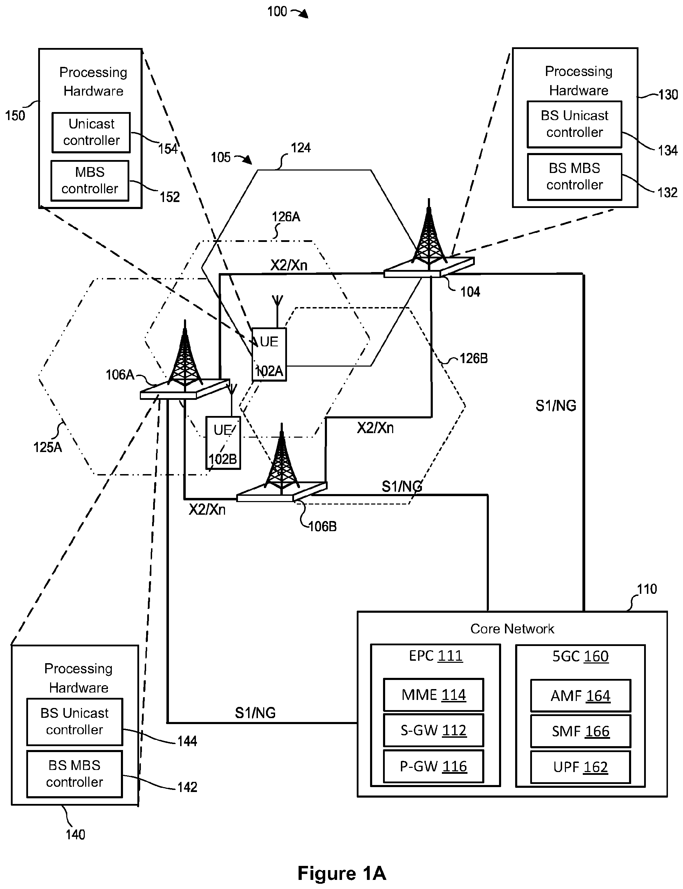

Fig. 1A depicts an example wireless communication system 100 that can implement unicast and MBS operation techniques of this disclosure. The wireless communication system 100 includes UE 102A and UE 102B, as well as base stations 104, 106A, 106B of a radio access network (RAN) (*e.g.,* RAN 105) that are connected to a core network (CN) 110. To ease readability, UE 102 is used herein to represent the UE 102A, the UE 102B, or both the UE 102A and UE 102B, unless otherwise specified. The base stations 104, 106A, 106B can be any suitable type, or types, of base stations, such as an evolved node B (eNB), a next-generation eNB (ng-eNB), or a 5G Node B (gNB), for example. As a more specific example, the base station 104 can be an eNB or a gNB, and the base stations 106A and 106B can be gNBs.

The base station 104 supports a cell 124, the base station 106A supports a cell 126A, and the base station 106B supports a cell 126B. The base station 106A may additionally support a cell 125A. The cell 124 partially overlaps with both of cells 126A and 126B, such that the UE 102 can be in range to communicate with base station 104 while simultaneously being in range to communicate with base station 106A or 106B (or in range to detect or measure the signal from both base stations 106A and 106B). The overlap can make it possible for the UE 102 to hand over between cells (*e.g.,* from cell 124 to cell 126A or 126B) or base stations (*e.g.*, from base station 104 to base station 106A or base station 106B) before the UE 102 experiences radio link failure, for example. Moreover, the overlap allows the various dual connectivity (DC) scenarios discussed below. For example, the UE 102 can communicate in DC with the base station 104 (operating as an MN) and the base station 106A (operating as an SN) and, upon completing a handover to base station 106B, can communicate with the base station 106B (operating as an MN). As another example, the UE 102 can communicate in DC with the base station 104 (operating as an MN) and the base station 106A (operating as an SN) and, upon completing an SN change, can communicate with the base station 104 (operating as an MN) and the base station 106B (operating as an SN).

More particularly, when the UE 102 is in DC with the base station 104 and the base station 106A, the base station 104 operates as a master eNB (MeNB), a master ng-eNB (Mng-eNB), or a master gNB (MgNB), and the base station 106A operates as a secondary gNB (SgNB) or a secondary ng-eNB (Sng-eNB).

In non-MBS operation, the UE 102 can use a radio bearer (*e.g.,* a DRB or an SRB) that at different times terminates at an MN (*e.g.,* the base station104) or an SN (*e.g.,* the base station 106A). For example, after handover or SN change to the base station 106B, the UE 102 can use a radio bearer (*e.g.,* a DRB or an SRB) that at different times terminates at the base station 106B. The UE 102 can apply one or more security keys when communicating on the radio bearer, in the uplink (from the UE 102 to a base station) and/or downlink (from a base station to the UE 102) direction. In the non-MBS operation, the UE 102 transmits data via the radio bearer on (*i.e.,* within) an uplink bandwidth part (BWP) of a cell to the base station and/or receives data via the radio bearer on a downlink BWP of the cell from the base station. The uplink BWP can be an initial uplink BWP or a dedicated uplink BWP, and the downlink BWP can be an initial DL BWP or a dedicated downlink BWP.

In MBS operation, the UE 102 can use a radio bearer (*e.g.,* an MBS radio bearer (MRB)) that at different times terminates at an MN (*e.g.,* the base station 104) or an SN *(e.g.,* the base station 106A). For example, after handover or SN change to the base station 106B, the UE 102 can use a radio bearer (*e.g.,* an MRB) that at different times terminates at the base station 106B. In some implementations, the UE 102 can apply one or more security keys to decrypt data and/or check integrity of the data when receiving the data on the radio bearer, in the downlink (from a base station to the UE 102) direction. In other implementations, the UE 102 can apply no security key to data received on the radio bearer. In the MBS operation, the UE 102 receives MBS data (*e.g.,* via the MRB) on an MBS downlink BWP of a cell from a base station.

The base station 104 includes processing hardware 130, which can include one or more general-purpose processors (*e.g*., central processing units (CPUs)) and a computer-readable memory storing machine-readable instructions executable on the one or more general-purpose processor(s), and/or special-purpose processing units. The processing hardware 130 in the example implementation in Fig. 1A includes a base station MBS controller 132 that is configured to manage reception of MBS interest indications or control transmission of MBS data received from the CN 110 or an edge server. For example, the base station MBS controller 132 can be configured to support Radio Resource Control (RRC) configurations, procedures and messaging associated with handover procedures, PSCell change procedures, unicast reconfiguration procedures, and/or to support the necessary operations, as discussed below. The processing hardware 130 can include a base station unicast controller 134 configured to manage or control one or more RRC configurations and/or RRC procedures when the base station 104 operates as an MN or SN during a non-MBS operation.

The base station 106A includes processing hardware 140, which can include one or more general-purpose processors (*e.g*., CPUs) and a computer-readable memory storing machine-readable instructions executable on the general-purpose processor(s), and/or special-purpose processing units. The processing hardware 140 in the example implementation of Fig. 1A includes a base station MBS controller 142 that is configured to manage reception of MBS interest indications or control transmission of MBS data received from the CN 110 or an edge server. For example, the base station MBS controller 142 can be configured to support RRC configurations, procedures and messaging associated with handover procedures, PSCell change procedures, unicast reconfiguration procedures, and/or to support the necessary operations, as discussed below. The processing hardware 140 can include a base station unicast controller 144 configured to manage or control one or more RRC configurations and/or RRC procedures when the base station 106A operates as an MN or SN during a non-MBS operation. While not shown in Fig. 1A, the base station 106B can include processing hardware similar to the processing hardware 130 of the base station 104 or the processing hardware 140 of the base station 106A.

The UE 102 includes processing hardware 150, which can include one or more general-purpose processors (*e.g*., CPUs) and a computer-readable memory storing machine-readable instructions executable on the general-purpose processor(s), and/or special-purpose processing units. The processing hardware 150 in the example implementation of Fig. 1A includes a UE MBS controller 152 that is configured to manage transmission of MBS interest indications or control reception of MBS data. For example, the UE MBS controller 152 can be configured to support RRC configurations, procedures and messaging associated with handover procedures, PSCell change procedures, MBS operation, and/or to support the necessary operations, as discussed below. The processing hardware 150 can include a UE unicast controller 154 configured to manage or control one or more RRC configurations and/or RRC procedures in accordance with any of the implementations discussed below, when the UE 102 communicates with an MN and/or an SN during a non-MBS operation.

The CN 110 can be an evolved packet core (EPC) 111 or a fifth-generation core (5GC) 160, both of which are depicted in Fig. 1A. The base station 104 can be an eNB supporting an S1 interface for communicating with the EPC 111, an ng-eNB supporting an NG interface for communicating with the 5GC 160, or a gNB that supports an NR radio interface as well as an NG interface for communicating with the 5GC 160. The base station 106A can be an EUTRA-NR DC (EN-DC) gNB (en-gNB) with an S1 interface to the EPC 111, an en-gNB that does not connect to the EPC 111, a gNB that supports the NR radio interface and an NG interface to the 5GC 160, or a ng-eNB that supports an EUTRA radio interface and an NG interface to the 5GC 160. To directly exchange messages with each other during the scenarios discussed below, the base stations 104, 106A, and 106B can support an X2 or Xn interface.

Among other components, the EPC 111 can include a Serving Gateway (SGW) 112, a Mobility Management Entity (MME) 114, and a Packet Data Network Gateway (PGW) 116. The S-GW 112 is generally configured to transfer user-plane packets related to audio calls, video calls, Internet traffic, etc., and the MME 114 is configured to manage authentication, registration, paging, and other related functions. The P-GW 116 provides connectivity from the UE to one or more external packet data networks, e*.g.*, an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. The UPF 162 is generally configured to transfer user-plane packets related to audio calls, video calls, Internet traffic, etc., the AMF 164 is configured to manage authentication, registration, paging, and other related functions, and the SMF 166 is configured to manage PDU sessions. The UPF 162, AMF 164 and/or the SMF 166 can be configured to support MBS. For example, the SMF 166 can be configured to manage or control MBS transport, configure the UPF 162 and/or RAN 105 for MBS flows, and/or manage or configure MBS session(s) or PDU Session(s) for MBS for UE 102. The UPF 162 is configured to transfer MBS data packets to audio, video, Internet traffic, etc. to the RAN 105. The UPF 162 and/or SMF 166 can be configured for both unicast service and MBS, or for MBS only.

Generally, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure can also apply to other suitable radio access and/or core network technologies such as sixth generation (6G) radio access and/or 6G core network or 5G NR-6G DC, for example.

In different configurations or scenarios of the wireless communication system 100, the base station 104 can operate as an MeNB, an Mng-eNB, or an MgNB, the base station 106B can operate as an MeNB, an Mng-eNB, an MgNB, an SgNB, or an Sng-eNB, and the base station 106A can operate as an SgNB or an Sng-eNB. The UE 102 can communicate with the base station 104 and the base station 106A or 106B via the same radio access technology (RAT), such as EUTRA or NR, or via different RATs.

When the base station 104 is an MeNB and the base station 106A is an SgNB, the UE 102 can be in EN-DC with the MeNB 104 and the SgNB 106A. When the base station 104 is an Mng-eNB and the base station 106A is an SgNB, the UE 102 can be in next generation (NG) EUTRA-NR DC (NGEN-DC) with the Mng-eNB 104 and the SgNB 106A. When the base station 104 is an MgNB and the base station 106A is an SgNB, the UE 102 can be in NR-NR DC (NR-DC) with the MgNB 104 and the SgNB 106A. When the base station 104 is an MgNB and the base station 106A is an Sng-eNB, the UE 102 can be in NR-EUTRA DC (NE-DC) with the MgNB 104 and the Sng-eNB 106A.

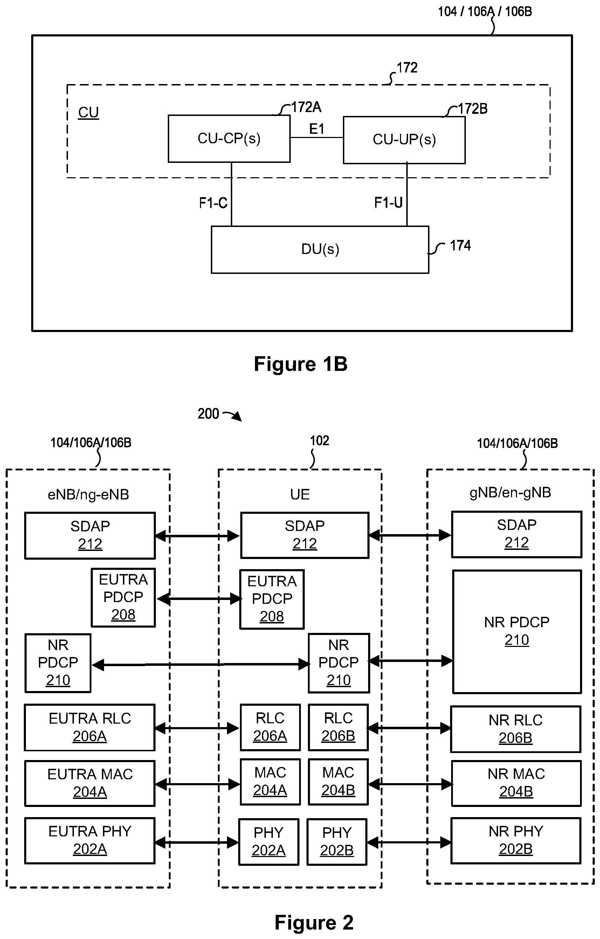

Fig. 1B depicts an example, distributed or disaggregated implementation of any one or more of the base stations 104, 106A, 106B. In this implementation, the base station 104, 106A, or 106B includes a centralized unit (CU) 172 and one or more DUs 174. The CU 172 includes processing hardware, such as one or more general-purpose processors (*e.g*., CPUs) and a computer-readable memory storing machine-readable instructions executable on the general-purpose processor(s), and/or special-purpose processing units. For example, the CU 172 can include the processing hardware 130 or 140 of Fig. 1A.

Each of the DUs 174 also includes processing hardware that can include one or more general-purpose processors (*e.g*., CPUs) and computer-readable memory storing machine-readable instructions executable on the one or more general-purpose processors, and/or special-purpose processing units. For example, the processing hardware can include a medium access control (MAC) controller configured to manage or control one or more MAC operations or procedures (*e.g.,* a random access procedure), and a radio link control (RLC) controller configured to manage or control one or more RLC operations or procedures when the base station (*e.g*., base station 106A) operates as an MN or an SN. The process hardware can also include a physical layer controller configured to manage or control one or more physical layer operations or procedures.

In some implementations, the CU 172 can include a logical node CU-CP 172A that hosts the control plane part of the Packet Data Convergence Protocol (PDCP) protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit non-MBS control information and MBS control information, and the CU-UP 172B can transmit the non-MBS data packets and MBS data packets.

The CU-CP 172A can be connected to multiple CU-UP 172B through the E1 interface. The CU-CP 172A selects the appropriate CU-UP 172B for the requested services for the UE 102. In some implementations, a single CU-UP 172B can be connected to multiple CU-CP 172A through the E1 interface. The CU-CP 172A can be connected to one or more DU 174s through an F1-C interface. The CU-UP 172B can be connected to one or more DU 174 through the F1-U interface under the control of the same CU-CP 172A. In some implementations, one DU 174 can be connected to multiple CU-UP 172B under the control of the same CU-CP 172A. In such implementations, the connectivity between a CU-UP 172B and a DU 174 is established by the CU-CP 172A using Bearer Context Management functions.

Fig. 2 illustrates, in a simplified manner, an example protocol stack 200 according to which the UE 102 can communicate with an eNB/ng-eNB or a gNB *(e.g.,* one or more of the base stations 104, 106A, 106B).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP 210 over EUTRA RLC 206A, and an SDAP sublayer 212 over the NR PDCP sublayer 210.

The EUTRA PDCP sublayer 208 and the NR PDCP sublayer 210 receive packets (*e.g.,* from an Internet Protocol (IP) layer, layered directly or indirectly over the PDCP layer 208 or 210) that can be referred to as service data units (SDUs), and output packets (*e.g.,* to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages or non-access-stratum (NAS) messages, for example. On a user plane, the EUTRA PDCP sublayer 208 and the NR PDCP sublayer 210 can provide DRBs to support data exchange. Data exchanged on the NR PDCP sublayer 210 can be SDAP PDUs, Internet Protocol (IP) packets or Ethernet packets.

In scenarios where the UE 102 operates in EN-DC with the base station 104 operating as an MeNB and the base station 106A operating as an SgNB, the wireless communication system 100 can provide the UE 102 with an MN-terminated bearer that uses EUTRA PDCP sublayer 208, or an MN-terminated bearer that uses NR PDCP sublayer 210. The wireless communication system 100 in various scenarios can also provide the UE 102 with an SN-terminated bearer, which uses only the NR PDCP sublayer 210. The MN-terminated bearer can be an MCG bearer or a split bearer. The SN-terminated bearer can be an SCG bearer or a split bearer. The MN-terminated bearer can be an SRB (*e.g.,* SRB1 or SRB2) or a DRB. The SN-terminated bearer can be an SRB or a DRB.

In some implementations, a base station (*e.g*., base station 104, 106A, or 106B) broadcasts MBS data packets (*e.g*., including application content such as text, voice or video packets) via one or more MBS radio bearers (MRB(s)), and in turn the UE 102 receives the MBS data packets via the MRB(s). The base station can include configuration(s) of the MRB(s) in MBS control information described below. In some implementations, the base station broadcasts the MBS data packets via RLC sublayer 206, MAC sublayer 204, and PHY sublayer 202, and correspondingly, the UE 102 uses PHY sublayer 202, MAC sublayer 204, and RLC sublayer 206 to receive the MBS data packets. In such implementations, the base station and the UE 102 may not use PDCP sublayer 208 and a SDAP sublayer 212 to communicate the MBS data packets. In other implementations, the base station broadcasts the MBS data packets via PDCP sublayer 208, RLC sublayer 206, MAC sublayer 204, and PHY sublayer 202, and correspondingly, the UE 102 uses PHY sublayer 202, MAC sublayer 204, RLC sublayer 206 and PDCP sublayer 208 to receive the MBS data packets. In such implementations, the base station and the UE 102 may not use a SDAP sublayer 212 to communicate the MBS data packets. In yet other implementations, the base station broadcasts the MBS data packets via the SDAP sublayer 212, PDCP sublayer 208, RLC sublayer 206, MAC sublayer 204 and PHY sublayer 202, and correspondingly, the UE 102 uses PHY sublayer 202, MAC sublayer 204, RLC sublayer 206, PDCP sublayer 208, and the SDAP sublayer 212 to receive the MBS data packets.

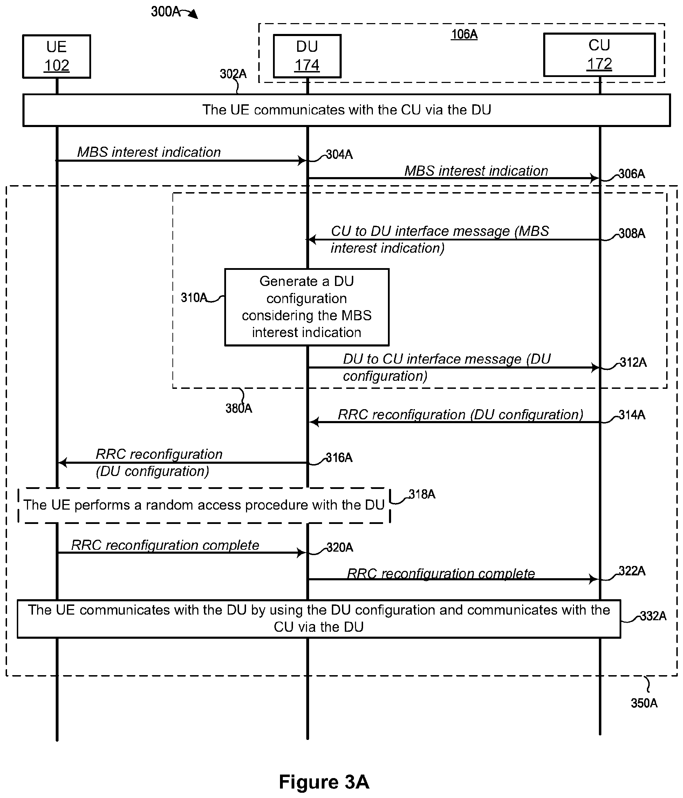

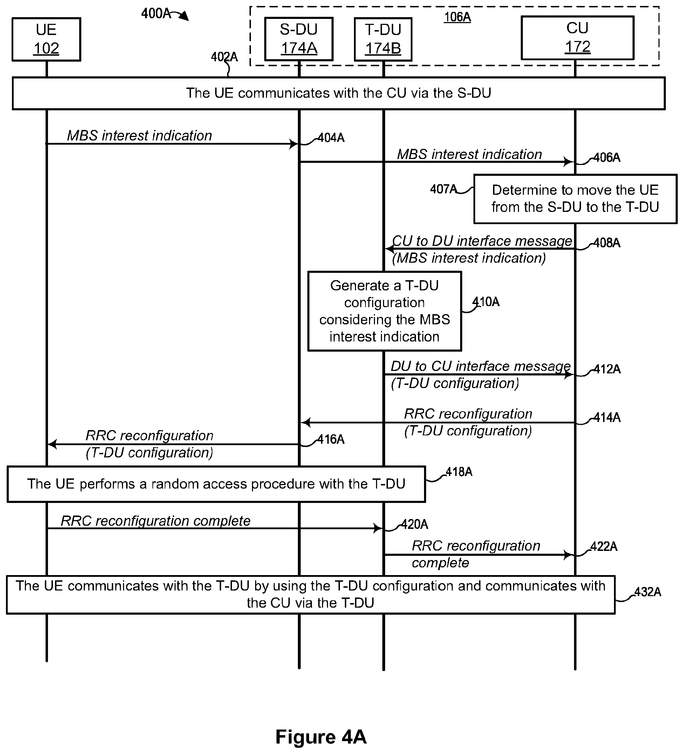

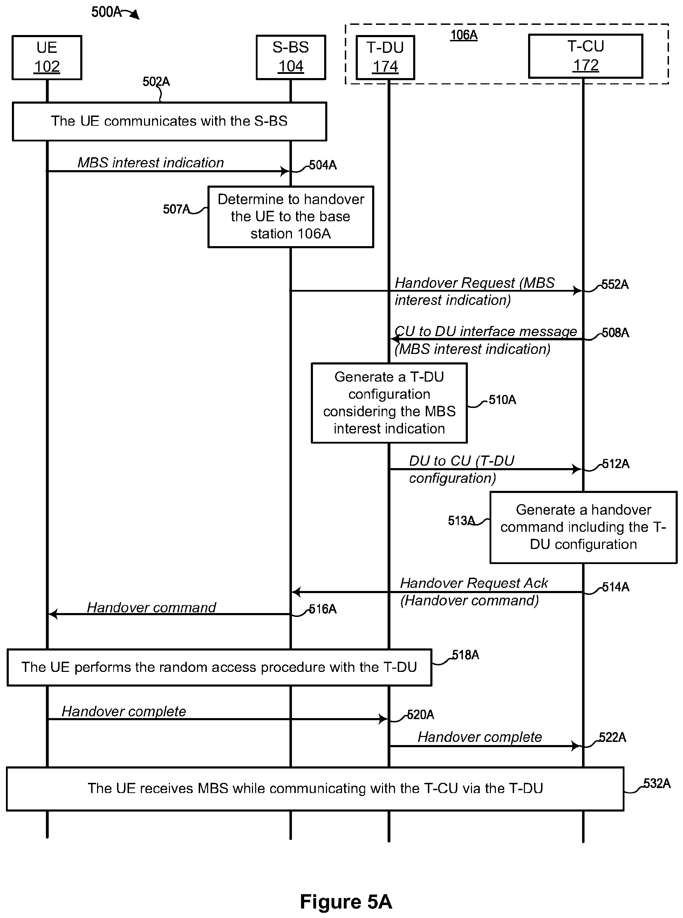

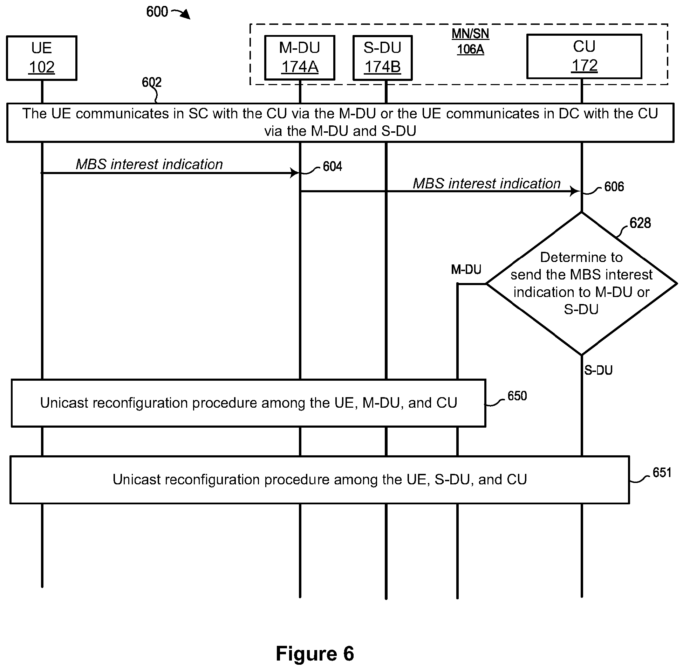

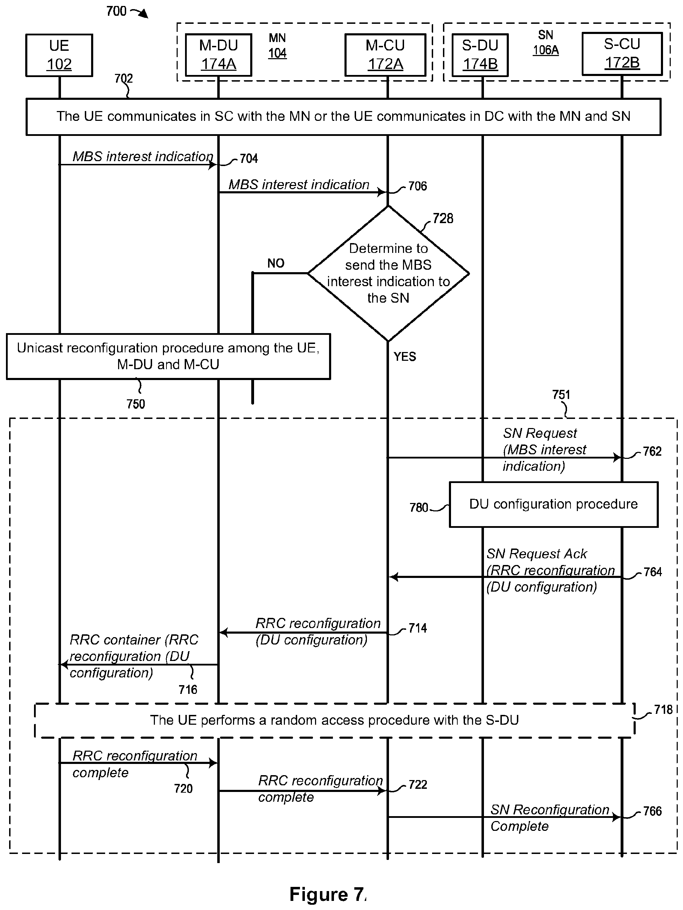

Figs. 3A-3D correspond to scenarios in which a UE provides an MBS interest indication to a base station, so that the base station can configure the UE, in view of the MBS interest indication, to receive MBS. MBS, also known as MBMS, is used interchangeably with MBMS throughout this disclosure. Figs. 4A-4B correspond to DU change scenarios (*e.g*., handover or PSCell change) in which a CU receives the MBS interest indication via a source DU, and then provides the MBS interest indication to a target DU. Figs. 5A-5B correspond to handover scenarios in which a source base station receives the MBS interest indication from the UE and subsequently hands over the UE to a target base station. Fig. 6 corresponds to a scenario in which a CU sends an MBS interest indication to either a first DU or a second DU. Fig. 7 corresponds to a scenario in which a CU of an MN sends an MBS interest indication to an SN or a DU of the MN.

Now referring to a scenario 300A illustrated in Fig. 3A, the UE 102 initially operates in a connected state (*e.g*., RRC_CONNECTED), or more generally in a state in which there is an active radio connection between the UE 102 and the base station 106A, which includes a DU 174 and a CU 172. That is, the UE 102 communicates 302A UL PDUs and/or DL PDUs with the CU 172 via the DU 174. In some implementations, the UE 102 is in SC with the base station 106A operating as an MN. In other implementations, the UE 102 is in DC with base station 106A and base station 104 (not shown in Fig. 3A), where the base station 106A operates as either an MN or SN, and the base station 104 operates as the corresponding SN or MN.

Later in time, the UE 102 transmits 304A an MBS interest indication (*i.e.,* a first MBS interest indication) to the DU 174. In some implementations, the UE 102 transmits 304A as a PDCP PDU including the first MBS interest indication to the DU 174. Because the DU 174 may not comprehend the first MBS interest indication or the PDCP PDU in its current format, the DU 174 forwards or sends 306A the first MBS interest indication or the PDCP PDU to the CU 172. In the first MBS interest indication, the UE 102 can indicate that the UE 102 is interested in receiving MBS, or is currently receiving MBS. In some scenarios and implementations, the UE 102 in SC or DC can transmit 304A the first MBS interest indication via SRB1 to the CU 172 via the DU 174 when the base station 106A operates as an MN. In other scenarios and implementations, the UE 102 in DC can transmit 304A the first MBS interest indication via SRB3 to the CU 172 via the DU 174 when the base station 106A operates as an SN.

After receiving the first MBS interest indication, the CU 172 processes the first MBS interest indication in a format recognizable by the DU 174, by including the first MBS interest indication in a CU to DU interface message. Alternatively, after receiving the PDCP PDU at the CU 172, the CU 172 extracts the first MBS interest indication from the PDCP PDU and includes the first MBS interest indication in the CU to DU interface message. The CU 172 then sends 308A the CU to DU interface message including the first MBS interest indication to the DU 174. In response, the DU 174 can generate 310A a DU configuration for the UE 102 considering the first MBS interest indication. For example, the DU 174 can generate 310A the DU configuration for the UE 102 so that the UE 102 can simultaneously communicate with the DU 174 and receive MBS from the DU 174. After generating the DU configuration, the DU 174 can send 312A a DU to CU interface message including the DU configuration to the CU 172. The events 308A, 310A, and 312A are collectively referred to in Fig. 3A as a DU configuration procedure 380A.

In response to receiving 312A the DU to CU interface message, the CU 172 sends 314A an RRC reconfiguration message including the DU configuration to the DU 174, which in turn transmits 316A the RRC reconfiguration message to the UE 102. In some implementations, upon receiving the RRC reconfiguration message, the UE 102 performs 318A a random access procedure with the DU 174 if the DU 174 configured the DU configuration to enable the UE 102 to perform the random access procedure. In other implementations, the DU 174 may not configure the UE 102 to perform the random access procedure via the DU configuration.

In response to receiving 316A the RRC reconfiguration message, the UE 102 transmits 320A an RRC reconfiguration complete message to the DU 174, which in turn sends 322A the RRC reconfiguration complete message to the CU 172. In implementations in which the UE 102 performs the random access procedure at event 318A in response to receiving the DU configuration, the UE 102 can transmit 320A the RRC reconfiguration complete message during or after the random access procedure. As a result, the UE 102 communicates 332A with the DU 174 by using the DU configuration and communicates 332A with the CU 172 via the DU 174. That is, after applying the DU configuration, the UE 102 can simultaneously receive MBS and communicate with the DU 174 for unicast data exchange. The events 308A, 310A, 312A, 314A, 316A, 318A, 320A, 322A and 332A are collectively referred to in Fig. 3A as a unicast reconfiguration procedure 350A.

In some scenarios and implementations, the DU 174 does not generate a DU configuration for the UE 102 because the DU 174 determines that the UE 102 is already configured to simultaneously receive MBS and communicate with the DU 174 for unicast data exchange, and thus, there is no need to update the current DU configuration at the UE 102. Accordingly, the DU 174 does not include a DU reconfiguration in the DU to CU interface message in event 312A. In this case, the DU 174 may switch a BWP of the UE 102 as described below. In some scenarios, the CU 172 does not send 308A the first MBS interest indication to the DU 174 because the CU 172, as opposed to the DU 174 described above, determines that the UE 102 is already configured to simultaneously receive MBS and communicate with the DU 174 for unicast data exchange, and thus, there is no need to update the current DU configuration at the UE 102. In these implementations, events 310A, 314A, 316A, 318A, 320A and 322A can be omitted from unicast reconfiguration procedure 350A.

In some implementations, in response to receiving 304A the first MBS interest indication or sometime after receiving the first MBS interest indication, the DU 174 may refrain from scheduling and/or transmitting a DL transmission including unicast data for the UE 102 in a slot where the UE 102 may receive MBS data packet(s).

In some implementations, in response to receiving 304A the first MBS interest indication, the DU 174 can transmit, to the UE 102, a downlink control information (DCI) command, which configures the UE 102 to switch from one BWP of a cell to another, different BWP of the cell for receiving non-MBS data packets (*i.e.,* unicast data packets). For example, if the UE 102 is configured to receive non-MBS data packets from the DU 174 on a first DL BWP of a cell, the UE 102 can switch from the first DL BWP to a second DL BWP of the cell for receiving non-MBS data packets in response to the DCI command sent on the first DL BWP. As a result, after receiving the DCI command, the UE 102 receives non-MBS data packets on the second DL BWP instead of the first DL BWP and the UE 102 then receives MBS data packets on the first DL BWP. The first DL BWP and second DL BWP can each be an initial DL BWP or a dedicated DL BWP, in some implementations.

In other implementations, the UE 102 receives non-MBS data packets from the DU 174 on the first DL BWP of the cell described above before receiving the DU configuration at event 316A. The DU 174 can generate 310A the DU configuration, which configures the UE 102 for the second DL BWP described above, so that the UE 102 receives non-MBS data packets while receiving MBS data packets. The UE 102 can switch from the first DL BWP to the second DL BWP for receiving non-MBS data packets in response to receiving 316A the DU configuration. After applying the DU configuration, the UE 102 receives non-MBS data packets on the second DL BWP instead of the first DL BWP. In one scenario and implementation, the UE 102 receives non-MBS data packets and MBS data packets on the second DL BWP and an MBS DL BWP of the cell, respectively. The second DL BWP and the MBS DL BWP may complete or partially overlap, may not overlap, or may be the same BWPs.

In some implementations, the DU 174 may configure the second DL BWP based on the MBS DL BWP and the UE capability indicating whether the UE 102 can simultaneously receive information on two non-overlapped DL BWPs. For example, if the UE capability indicates that the UE 102 can simultaneously receive information on two non-overlapped DL BWPs, the DU 174 may generate the DU configuration configuring the second DL BWP to either overlap or not overlap with the MBS DL BWP. In another example, if the UE capability indicates that the UE 102 cannot simultaneously receive information on two non-overlapped DL BWPs, the DU 174 may generate the DU configuration configuring the second DL BWP to include the MBS DL BWP (*i.e.,* a narrower MBS DL BWP is entirely within a wider second DL BWP). In yet another example, if the UE capability indicates that the UE 102 cannot simultaneously receive information on two non-overlapped DL BWPs, the DU 174 may generate the DU configuration configuring the second DL BWP within the MBS DL BWP (*i.e.,* a narrower second DL BWP is entirely within a wider MBS DL BWP).

In some implementations, the UE 102 transmits 304A the first MBS interest indication in response to activating MBS or while receiving MBS data packets (*e.g.,* a streaming video, a TV program, a live broadcast or multimedia content) from the DU 174. In some implementations, the UE 102 receives MBS configuration(s) and/or MBS control information on broadcast channel (BCCH) and/or multicast control channel (MCCH) from the DU 174 (*e.g.,* on cell 125A and/or cell 126A operated by the DU 174). In some implementations, the CU 172 may generate the MBS configuration(s) and/or MBS control information and send the MBS configuration(s) and/or MBS control information to the DU 174. In other implementations, the DU 174 may generate the MBS configuration(s) and/or MBS control information and send the MBS configuration(s) and/or MBS control information to the UE 102. In yet other implementations, the CU 172 may generate a first portion of the MBS configuration(s) and/or MBS control information and send the first portion of MBS configuration(s) and/or MBS control information to the DU 174. In turn, the DU 174 may generate the remainder (*i.e.,* a second portion) of the MBS configuration(s) and/or MBS control information and send the second portion of the MBS configuration(s) and/or MBS control information to the UE 102. The DU 174 can include the first and second portions of the MBS configuration(s) and/or MBS control information in the same SIB or in different SIBs, and/or in RRC message(s) which the DU 174 can broadcast on the BCCH and/or MCCH on at least one cell (*e.g.,* cell 125A and/or cell 126A) of the DU 174.

In some implementations, the DU 174 or the CU 172 can indicate, in the MBS configuration(s) and/or MBS control information, that a UE (*e.g.,* the UE 102) is allowed to transmit an MBS interest indication. If the DU 174 or the CU 172 indicates, in the MBS configuration(s) and/or MBS control information, that a UE (*e.g.,* the UE 102) is not allowed to transmit an MBS interest indication, the UE 102 does not transmit the first MBS interest indication at event 304A.

In some implementations, the DU 174 or the CU 172 can indicate, in the MBS configuration(s) and/or MBS control information, at least one carrier frequency where MBS(s) can be broadcasted (*i.e.,* MBS carrier frequency). For example, the MBS configuration(s) and/or MBS control information may include frequency information (*e.g*., frequency band number(s) and/or absolute radio frequency channel number(s) (ARFCN(s))) identifying the at least one carrier frequency. From the frequency information, the UE 102 may determine at least one MBS carrier frequency on which the UE 102 is interested in receiving MBS data packets or is currently receiving MBS data packets. In response to the determination, the UE 102 can include frequency band number(s) and/or ARFCN(s) indicating the at least one determined carrier frequency in the first MBS interest indication. From the first MBS interest indication, the DU 174 and/or the CU 172 thus can be aware of the at least one MBS carrier frequency where the UE 102 is interested in receiving or is currently receiving MBS data packets. In some implementations, the UE 102 can include an indication of a maximum receiving bandwidth and/or a supported subcarrier carrier spacing (SCS) for the at least one MBS carrier frequency in the first MBS interest indication. For example, the UE 102 can indicate that the maximum receiving bandwidth may not be smaller than 10 MHz. For example, the maximum receiving bandwidth can be 10, 15, 20, 25, 30, 35, 40, 45, 50, 55, 60, 65, 70, 75, 80, 85, 90, 95, 100, 200 or 400 MHz. In another example, the UE 102 can indicate that the maximum receiving bandwidth may not be smaller than 50 physical resource blocks, *e.g.,* 50, 75, 100, 125, 150, 175, 200, 225, 250, 275, 300, 325, 350, 375 or 400. In yet another example, the UE 102 can indicate that the supported SCS may be 1.25, 7.5, 15, 30, 60, 120 or 240 kHz. In these implementations, when the DU 174 receives 308A the first MBS interest indication, the DU 174 generates 310A a DU configuration in view of the desired MBS carrier frequency on which the UE 102 is interested in receiving or is currently receiving MBS. Accordingly, when the UE 102 receives 316A the DU configuration, the UE 102 is capable of receiving MBS on the desired MBS carrier frequency.

In some implementations, the DU 174 or the CU 172 can indicate, in the frequency information, an MBS DL BWP for a corresponding carrier frequency. For example, the frequency information can include MBS DL BWP configuration(s), each indicating an MBS DL BWP of a certain carrier frequency. Each of the MBS DL BWP configuration(s) can indicate bandwidth and/or location of an MBS DL BWP within a certain carrier frequency. Accordingly, from the frequency information, the UE 102 may identify the MBS DL BWP configuration(s) or MBS DL BWP(s) on which the UE 102 is interested in receiving or is currently receiving MBS data packets. In turn, the UE 102 can include, in the first MBS interest indication, MBS DL BWP information (*e.g*., the identified MBS DL BWP configuration(s) or MBS DL BWP(s)). From the first MBS interest indication, the DU 174 and/or the CU 172 thus can be aware of the MBS DL BWP(s) where the UE 102 is interested in receiving or is currently receiving MBS data packets.

In some implementations, the DU 174 or the CU 172 can indicate, in the MBS configuration(s) and/or MBS control information, which particular MBS(s) are broadcast for a carrier frequency indicated in the frequency information. For example, the MBS configuration(s) and/or MBS control information may include MBS session information identifying the particular MBS(s) broadcast on a carrier frequency in the frequency information. The MBS session information can include at least one MBS identity/identifier, service (QoS) flow identity/identifier, or temporary mobile group identity (TMGI). From the MBS session information, the UE 102 can identify the particular MBS(s) which the UE 102 is interested in receiving or is currently receiving. In response to the determination, the UE 102 can include at least one MBS identity/identifier, QoS flow identity/identifier, or TMGI indicating the identified MBS(s) in the first MBS interest indication.

In some implementations, the DU 174 or the CU 172 can indicate, in the MBS session information, which particular MBS(s) are broadcast on MBS DL BWP(s) of a carrier frequency indicated in the frequency information. For example, the DU 174 or the CU 172 can indicate, in the MBS session information, a first set of MBS(s) are broadcast on a first MBS DL BWP of a carrier frequency and a second set of MBS(s) are broadcast on a second MBS DL BWP of the carrier frequency indicated in the frequency information. In the first MBS interest indication, the UE 102 can include MBS DL BWP information (e*.g.*, at least one MBS DL BWP identity or MBS DL BWP configuration) indicating MBS DL BWP(s) (*e.g.,* the first or second MBS DL BWP, or both) where the UE 102 is interested in receiving or is currently receiving the first and/or second sets of MBS(s). From the first MBS interest indication, the DU 174 and/or the CU 172 thus can be aware of the MBS DL BWP(s) where the UE 102 is interested in receiving or is currently receiving the first and/or second sets of MBS(s).

In some implementations, the UE 102 can include, in the first MBS interest indication, one or more measurement results of the at least one carrier frequency described above. In other implementations, the UE 102 can indicate a time that the UE 102 will start receiving MBS, so that the CU 172 can determine a lead time to perform the unicast reconfiguration procedure 350A. For example, if the UE 102 will receive MBS (*e.g.,* IPTV programming) in one minute or at a certain time (*e.g.,* 10:30am), the UE 102 can indicate "1 min" or "1030" in the first MBS interest indication. As described in Fig. 3A, the CU 172 and DU 174 can update the DU configuration currently used by the UE 102 for unicast data exchange so that the UE 102 can simultaneously receive MBS and communicate with the DU 174 for unicast data exchange via the unicast reconfiguration procedure 350A. In some implementations, the unicast reconfiguration procedure 350A can involve changing a special cell (SpCell) of the UE 102, releasing an SCell of the UE 102, or adding a new SCell for the UE 102.

In some implementations, the CU 172 may determine to change a SpCell of the UE 102 based on the first MBS interest indication. In response to the determination, the CU 172 can include an SpCell identity of a new SpCell in the CU to DU interface message at event 308A. The new SpCell can be a PCell or PSCell. When the DU 174 generates 310A the DU configuration, the DU 174 establishes configuration parameters to configure the UE 102 to change to the new SpCell according to the SpCell identity. The configuration parameters may include random access configuration parameters for the UE 102 to perform 318A the random access procedure on the new SpCell. In some implementations, the DU 174 operates the new SpCell on a carrier frequency indicated in the first MBS interest indication. Thus, the UE 102 can simultaneously receive MBS and communicate with the DU 174 for unicast data exchange via the new SpCell.

In other implementations, the CU 172 may determine to release a SCell of the UE 102 based on the first MBS interest indication. In response to the determination, the CU 172 can include an SCell identity of the SCell to be released in the CU to DU interface message at event 308A. When the DU 174 generates 310A the DU configuration, the DU 174 establishes configuration parameters to configure the UE 102 to release the SCell according to the SCell identity of the SCell to be released. The configuration parameters may not include random access configuration parameters for the UE 102 to perform a random access procedure, so that event 318A can be bypassed. In some implementations, the CU 172 may determine to release a SCell of the UE 102 based on a UE capability of the UE 102 in addition to the first MBS interest indication. For example, the UE capability may indicate that the UE 102 is capable of carrier aggregation (CA) with N downlink carriers (and unable to receive MBS on a carrier not in the N downlink carriers), and capable of CA with (N-1) downlink carriers (and capable of receiving MBS on a carrier not in the (N-1) downlink carriers, wherein N>1). In this example, if the CU 172 has configured the UE 102 in CA with N downlink carriers and the first MBS interest indication indicates a carrier frequency not in the N downlink carriers, the CU 172 may determine to release a SCell operated on the indicated carrier frequency. In some implementations, the UE capability can be a *UE-NR-Capability* IE or a *UE-MRDC-Capability* IE.

In yet other implementations, the CU 172 may determine to add a new SCell for the UE 102 based on the first MBS interest indication. In response to the determination, the CU 172 can include an SCell identity of the new SCell to be added in the CU to DU interface message at event 308A. When the DU 174 generates 310A the DU configuration, the DU 174 establishes configuration parameters to configure the UE 102 to add the new SCell according to the SCell identity of the new SCell. The configuration parameters may include random access configuration parameters for the UE 102 to perform 318A the random access procedure on the new SCell. In some implementations, the CU 172 may determine to add a new SCell of the UE 102 based on a UE capability of the UE 102 in addition to the first MBS interest indication. For example, the UE capability may indicate that the UE 102 is capable of carrier aggregation (CA) with N downlink carriers (and unable to receive MBS on a carrier not in the N downlink carriers), and capable of CA with (N-1) downlink carriers (and capable of receiving MBS on a carrier not in the (N-1) downlink carriers, wherein N>1). In this example, if the CU 172 has configured the UE 102 to receive MBS on the N-1 downlink carriers and the first MBS interest indication indicates a carrier frequency not in the N-1 downlink carriers, the CU 172 may determine to add a SCell operated on the indicated carrier frequency.

In some implementations, the DU 174 can generate 310A the DU configuration for the UE 102, so that the UE 102 can simultaneously communicate with the DU 174 on one or more carrier frequencies and receive MBS on a carrier frequency indicated in the first MBS interest indication. The one or more carrier frequencies may or may not include the carrier frequency indicated in the first MBS interest indication.

In some scenarios and implementations, the DU configuration includes a Discontinuous (DRX) configuration. In one implementation, the DU 174 can generate a DRX configuration so that the UE 102 can simultaneously receive MBS data packets and non-MBS data packets in slots in "On" duration in as many DRX cycles as possible. Thus, the UE 102 can benefit in power savings from the DRX configuration. The DU 174 may generate the DRX configuration if the UE 102 is capable of receiving MBS data packet and non-MBS data packet in the same slot. In another implementation, the DU 174 can generate a DRX configuration so that the UE 102 can simultaneously receive MBS data packets and non-MBS data packets in slots in "Off" duration DRX cycles and in slots in "On" duration DRX cycles, respectively. The DU 174 may generate the DRX configuration if the UE 102 is not capable of receiving MBS data packet and non-MBS data packet in the same slot.

In some implementations, the DU 174 or the CU 172 can indicate, in the MBS configuration(s) and/or MBS control information, MBS area information for a carrier frequency or a cell in the frequency information. For example, the MBS area information can be at least one MBS service area identity identifying at least one MBS service area. From the MBS area information, the UE 102 may determine whether an MBS is broadcast on a carrier frequency or on a cell (*e.g.,* cell 125A).

In some implementations, the UE 102 determines whether at least one MBS can be received from the DU 174 (*e.g.,* on cell 125A operated by the DU 174) according to MBS configuration(s) and/or MBS control information. The UE 102 can use the MBS configuration(s) and/or MBS control information to receive multicast traffic channel(s) (MTCH) from the DU 174 (*e.g.,* on cell 125A operated by the DU 174), which carries MBS data packets of the MBS. In some implementations, the MBS configuration(s) include a MCCH configuration for configuring the MCCH, and the MBS control information includes MTCH configuration(s) for configuring the MTCH. The DU 174 may broadcast at least SIB(s) including the MBS configuration(s) on the BCCH, and the MBS control information on the MCCH. The UE 102 may acquire the SIB(s) to obtain the MCCH configuration, and then receive the MBS control information on the MCCH configured by the MCCH configuration. The UE 102 may receive MBS data packets on the MTCH(s) according to the MBS control information.

In some implementations the CU to DU interface message can be a *UE Context Modification Request* message and the DU to CU interface message can be a *UE Context Modification Response* message responding to the *UE Context Modification Request* message. In other implementations, the CU to DU interface message can be a *UE Context Modification Request* message and the DU to CU interface message can be a *UE Context Modification Required* message. In such implementations, the DU 174 can transmit a *UE Context Modification Response* message to the CU 172 in response to the *UE Context Modification Request* message, and the CU 172 can transmit a *UE Context Modification Confirm* message to the CU 172 in response to the *UE Context Modification Required* message.

In some implementations, the DU 174 can send 306A a DU to CU message including the first MBS interest indication to the CU 172. For example, the DU to CU message can be a *UL RRC Message Transfer* message or *UE Context Modification Required* message.

In some implementations, the RRC reconfiguration message and RRC reconfiguration complete are an *RRCReconfiguration* message and *RRCReconfigurationComplete* message, respectively. The DU configuration may include an information element (IE) (*e.g., ReconfigurationWithSync*) configuring the UE 102 to perform random access. The DU configuration can be a *CellGroupConfig* IE or include configurations in the *CellGroupConfig* IE conforming to 3GPP specification 38.331. In other implementations, the RRC reconfiguration message and RRC reconfiguration complete are an *RRCConnectionReconfiguration* message and *RRCConnectionReconfigurationComplete* message, respectively. The DU configuration may include an IE (*e.g., MobilityControlInfo*) configuring the UE 102 to perform random access. The DU configuration can include configurations in the *RRCConnectionReconfiguration* message conforming to 3GPP specification 36.331.

In some scenarios and implementations, the UE 102 can send another (*i.e.,* second) MBS interest indication to the CU 172, in a way similar to events 304A and 306A. In response, the CU 172 can perform a second unicast reconfiguration procedure with the DU 174 and the UE 102, similar to the unicast reconfiguration procedure 350A. In the second MBS interest indication, the UE 102 can indicate that the UE 102 is no longer interested in receiving (or is not currently receiving) an MBS, or at least the MBS indicated in the first MBS interest indication. In receiving the second MBS interest indication, the DU 174 is aware that the UE 102 is no longer interested in receiving (or is not currently receiving) MBS. In some implementations, the DU 174 may generate a new DU configuration updating the previous DU configuration generated at event 310A, in response to the second MBS interest indication or the CU to DU interface message including the second MBS interest indication, to revert the changes made by the previous DU configuration, for example. Consequently, the DU 174 can transmit unicast data to the UE 102 without considering that the UE 102 may attempt to receive MBS. In other implementations, the DU 174 does not generate a new DU configuration. After receiving the second MBS interest indication, the DU 174 can send to the UE 102 a DCI command configuring the UE 102 to switch back to the first DL BWP from the second DL BWP, for example.

In other scenarios and implementations, in response to receiving the second MBS interest indication from the UE 102, the CU 172 refrains from sending the second MBS interest indication to the DU 174, preventing the DU 174 from performing the second unicast reconfiguration procedure described above.

In some implementations, the first or second MBS interest indication can be a new RRC message (*e.g.,* an *MBSInterestIndication* or *MBMSInterestIndication* message) defined in 3GPP TS 38.331. In other implementations, the UE 102 can transmit 304A a first RRC message including the first MBS interest indication to the DU 174, which in turn sends 306A the first RRC message to the CU 172. Similarly, the UE 102 can transmit a second RRC message including the second MBS interest indication to the DU 174, which in turn sends the second RRC message to the CU 172. The first and second RRC messages can each be a *UEAssistanceInformation* message.

In some implementations, if the base station 106A is a gNB, the RRC reconfiguration message and the RRC reconfiguration complete message can be an *RRCReconfiguration* message and an *RRCReconfigurationComplete* message, respectively. In some implementations, if the base station 106A is an eNB or an ng-eNB, the RRC reconfiguration message and the RRC reconfiguration complete message can be an *RRCConnectionReconfiguration* message and an *RRCConnectionReconfigurationComplete* message, respectively.

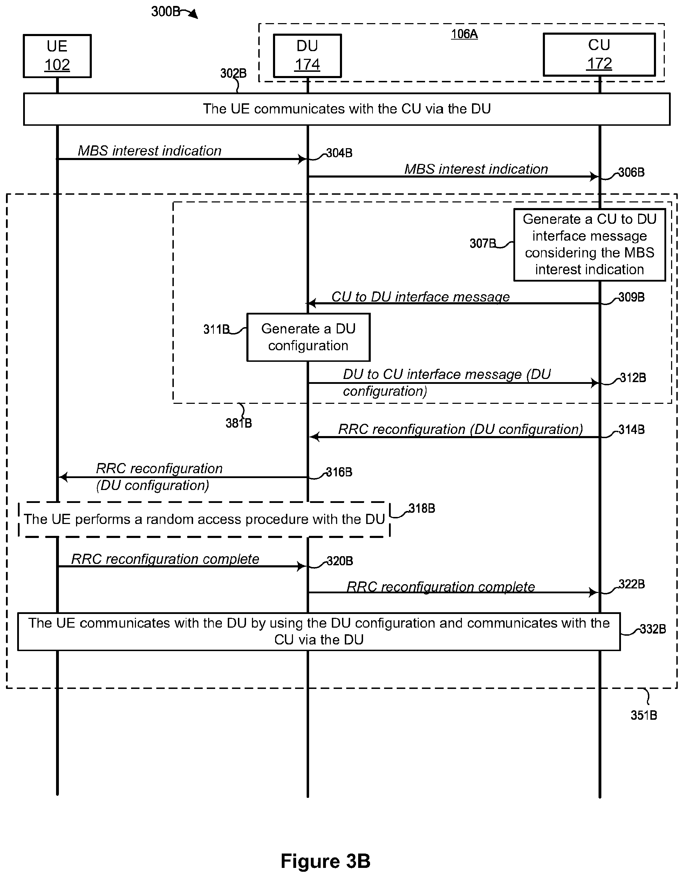

Now referring to Fig. 3B, whereas the CU 172 of Fig. 3A sends the first MBS interest indication in a CU to DU interface message to the DU 174, the CU 172 of Fig. 3B refrains from sending the first MBS interest indication to the DU 174, and instead, generates a CU to DU interface message considering the first MBS interest indication, and sends the CU to DU interface message to the DU 174. Otherwise, any of the implementations described above in reference to Fig. 3A can be applied to scenario 300B of Fig. 3B.

For example, the CU 172 can indicate changing a SpCell, releasing an SCell, or adding a new SCell based on the first MBS interest indication as described for Fig. 3A. In another example, the CU 172 can indicate the DU 174 to change a BWP of the UE 102 in the CU to DU interface message so that the UE 102 can simultaneously receive MBS data packets and non-MBS data packets. In yet another example, the CU 172 can configure the DU 174 to apply a DRX configuration in the CU to DU interface message so that the UE 102 can simultaneously receive MBS data packets and non-MBS data packets. In one implementation, the CU 172 can generate a DRX configuration so that the UE 102 can receive MBS data packets and non-MBS data packets in slots in "On" duration in as many DRX cycles as possible. Thus, the UE 102 can benefit in power savings from the DRX configuration. The CU 172 may generate the DRX configuration if the UE 102 is capable of receiving MBS data packet and non-MBS data packet in the same slot. In another implementation, the CU 172 can generate a DRX configuration so that the UE 102 can simultaneously receive MBS data packets and non-MBS data packets in slots in "Off" duration DRX cycles and in slots in "On" duration DRX cycles respectively. The CU 172 may generate the DRX configuration if the UE 102 is not capable of receiving MBS data packet and non-MBS data packet in the same slot.

Similar to scenario 300A, in scenario 300B, the UE 102 initially operates in a connected state, and thus communicates 302B with the CU 172 via the DU 174, similar to event 302A. Later in time, the UE 102 transmits 304B an MBS interest indication (*i.e.,* a first MBS interest indication) to the DU 174, which in turn sends 306B the first MBS interest indication to the CU 172, similar to events 302A and 306A, respectively.

In response to receiving the first MBS interest indication, the CU 172 generates 307B a CU to DU interface message considering the first MBS interest indication. Then the CU 172 sends 309B the CU to DU interface message to the DU 174, similar to event 308A, except that the CU 172 does not include an MBS interest indication in the CU to DU interface message at event 309B. In response to the CU to DU interface message, the DU 174 generates 311B a DU configuration, and sends 312B the DU configuration in a DU to CU interface message similar to events 310A and 312A, respectively. The events 307B, 309B, 311B, and 312B are collectively referred to in Fig. 3B as a DU configuration procedure 381B.

The CU 172, DU 174, and UE 102 proceed to events 314B, 316B, 318B, 320B, 322B, and 332B, similar to events 314A, 316A, 318A, 320A, 322A, and 332A, respectively. The events 307B, 309B, 311B, 312B, 314B, 316B, 318B, 320B, 322B, and 332B are collectively referred to in Fig. 3B as a unicast reconfiguration procedure 351B.

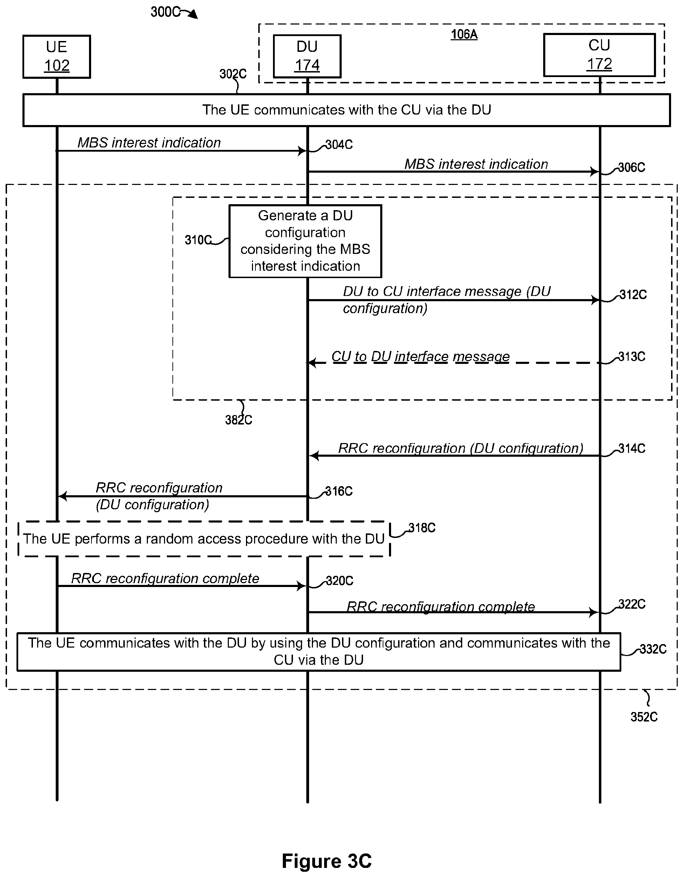

Now referring to Fig. 3C, whereas the DU 174 of Fig. 3A does not comprehend the first MBS interest indication in its current format when received from the UE 102, the DU 174 of Fig. 3C comprehends the first MBS interest indication when received from the UE 102. Otherwise, any of the implementations described above in reference to Fig. 3A can be applied to scenario 300C of Fig. 3C.

Similar to scenario 300A, in scenario 300C, the UE 102 initially operates in a connected state, and thus communicates 302C with the CU 172 via the DU 174, similar to event 302A. Later in time, the UE 102 transmits 304C an MBS interest indication *(i.e.,* a first MBS interest indication) to the DU 174, which in turn sends 306C the first MBS interest indication to the CU 172, similar to events 304A and 306A, respectively. Because the DU 174 of Fig. 3C comprehends the first MBS interest indication or extracts the first MBS interest indication from the PDCP PDU, when received from the UE 102, the DU 174 need not rely on the CU 172 to reformat the first MBS interest indication into a CU to DU interface message, as described in event 308A. Rather than receiving the CU to DU interface message from the CU 172, the DU 174 can generate 310C a DU configuration considering the first MBS interest indication in response to receiving 304C the first MBS interest indication from the UE 102. Similar to event 310A, if the first MBS interest indication conveys a desired carrier frequency on which the UE 102 is interested in receiving or is currently receiving MBS, the DU 174 can generate 310C the DU configuration in view of the desired carrier frequency. Accordingly, when the UE 102 receives 316C the DU configuration, the UE 102 is capable of receiving MBS on the desired carrier frequency.

After generating the DU configuration, the DU 174 sends 312C a DU to CU interface message including the DU configuration to the CU 172. As an option, the relaying 306C of the first MBS interest indication can be deferred and combined with the sending 312C of this DU to CU interface message. In some implementations, the CU 172 may send 313C a CU to DU interface message to the DU 174 in response to the DU to CU interface message. The DU to CU interface message and the CU to DU interface message can be a *UE Context Modification Required* message and a *UE Context Modification Confirm* message, respectively. The events 310C, 312C, and 313C are collectively referred to in Fig. 3C as a DU configuration procedure 382C.

The CU 172, DU 174, and UE 102 proceed to events 314C, 316C, 318C, 320C, 322C, and 332C, similar to events 314A, 316A, 318A, 320A, 322A, and 332A, respectively. The events 310C, 312C, 313C, 314C, 316C, 318C, 320C, 322C, and 332C are collectively referred to in Fig. 3C as a unicast reconfiguration procedure 352C.

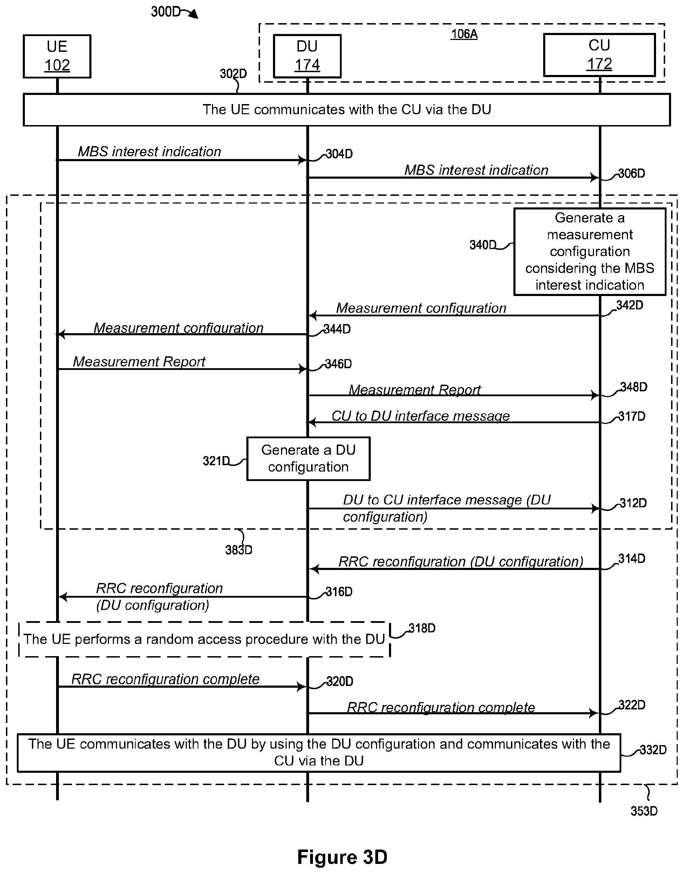

Now referring to Fig. 3D, similar to scenarios 300A and 300B, in scenario 300D the CU 172 additionally generates a measurement configuration for the UE 102 based on the first MBS interest indication. Otherwise, any of the implementations described above in reference to Figs. 3A and 3B can be applied to scenario 300D of Fig. 3D.

In scenario 300D, the UE 102 initially operates in a connected state, and thus communicates 302D with the CU 172 via the DU 174, similar to event 302A. Later in time, the UE 102 transmits 304D an MBS interest indication (*i.e.,* a first MBS interest indication) to the DU 174, which in turn sends 306D the first MBS interest indication to the CU 172, similar to events 302A and 306A, respectively.

In response to receiving the first MBS interest indication, the CU 172 generates 340D a measurement configuration based on the first MBS interest indication. In implementations in which the UE 102 indicates, in the first MBS interest indication, a particular carrier frequency where the UE 102 is interested in receiving MBS or is currently receiving MBS, the CU 172 can generate a measurement configuration for the UE 102 so that the UE 102 can measure the particular carrier frequency upon receiving the measurement configuration. In some implementations, the UE 102 may include, in the first MBS interest indication, MBS DL BWP information for the particular carrier frequency. The MBS DL BWP information may include location and bandwidth information of an MBS DL BWP on the particular carrier frequency and/or subcarrier spacing (SCS) of the MBS DL BWP. By generating the measurement configuration in view of the MBS DL BWP information for the UE 102, the CU 172 can configure the UE 102 to measure reference signal(s) within the MBS DL BWP according to the MBS DL BWP information.

After generating the measurement configuration, the CU 172 sends 342D the measurement configuration to the DU 174, which in turn transmits 344D the measurement configuration to the UE 102. In some implementations, the CU 172 can send an RRC reconfiguration message including the measurement configuration to the UE 102 via the DU 174 at events 342D and 344D. In response, the UE 102 can transmit an RRC reconfiguration complete message to the CU 172 via the DU 174.

After receiving the measurement configuration, the UE 102 can transmit 346D a *Measurement Report* message to the DU 174, which in turn sends 348D the *Measurement Report* message to the CU 172. In some implementations, the UE 102 can include, in the *Measurement Report* message, measurement result(s) obtained from measurements on the particular carrier frequency or the MBS DL BWP. Based on the measurement result(s), the CU 172 can send 317D a CU to DU interface message to the DU 174, similar to event 308A or 309B. After receiving the CU to DU interface message, the DU 174 can generate 321D a DU configuration, similar to event 310A or 311B, and send 312D the DU configuration in a DU to CU interface message to the CU 172, similar to event 312A or 312B.

The events 340D, 342D, 344D, 346D, 348D, 317D, 321D, and 312D are collectively referred to in Fig. 3D as a DU configuration procedure 383D.

The CU 172, DU 174, and UE 102 proceed to events 314D, 316D, 318D, 320D, 322D, and 332D, similar to events 314A, 316A, 318A, 320A, 322A, and 332A, respectively. The events 340D, 342D, 344D, 346D, 348D, 317D, 321D, 312D, 314D, 316D, 318D, 320D, 322D, and 332D are collectively referred to in Fig. 3D as a unicast reconfiguration procedure 353D.

Now referring to Fig. 4A, RAN 105 can prepare the UE 102 to simultaneously receive MBS and unicast information from the RAN 105. Any of the implementations described above in reference to Figs. 3A, 3B, 3C, and 3D can be applied to scenario 400A of Fig. 4A. However, in scenario 400A of Fig. 4A, the UE 102 is prepared to simultaneously receive MBS and unicast information from the RAN 105 during a handover procedure with the RAN 105 (*e.g.,* from a cell of a source DU (S-DU) 174A of a serving base station 106A to a target cell of a target DU (T-DU) 174B of the same base station 106A), or PSCell change procedure (*e.g.*, from a PSCell of an S-DU 174A of a base station 106A to a PSCell of a T-DU 174B of the same base station 106A).

The UE 102 initially operates in a state (*e.g*., connected state) in which there is an active radio connection between the UE 102 and the base station 106A, which includes an S-DU 174A, a T-DU 174B, and a CU 172. That is, the UE 102 communicates 402A UL PDUs and/or DL PDUs with the CU 172 via the S-DU 174A, similar to event 302A.

Later in time, the UE 102 transmits 404A an MBS interest indication (*i.e.,* a first MBS interest indication) to the S-DU 174A, which in turn sends 406A the first MBS interest indication to the CU 172, similar to events 304A and 306A, respectively.

After receiving the first MBS interest indication, whereas the CU 172 of Fig. 3A determines to maintain the radio connectivity between the UE 102 and DU 174, the CU 172 of Fig. 4A determines 407A to reconfigure a radio connection of the UE 102 so that a termination point of the radio connection changes from the S-DU 174A to the T-DU 174B (*e.g.,* for a handover procedure or PSCell change procedure). In some implementations, the CU 172 determines 407A to select T-DU 174B in view of the first MBS interest indication (*e.g.,* when the first MBS interest indication conveys that the UE 102 desires to receive MBS on a particular carrier frequency, the T-DU 174B operates on the particular carrier frequency, and the S-DU 174A does not operate on the particular carrier frequency). In other implementations, the CU 172 determines 407A to select T-DU 174B in view of the mobility of the UE 102 (*e.g.,* the UE 102 is located closer to the T-DU 174B than the S-DU 174A and thus receives stronger radio signals from the T-DU 174B). Thus, the CU 172 sends 408A a CU to DU interface message including the first MBS interest indication to the T-DU 174B, as opposed to the S-DU 174A at event 308A. In response, the T-DU 174B can generate 410A a T-DU configuration for the UE 102 considering the first MBS interest indication. For example, the T-DU 174B can generate 410A the T-DU configuration for the UE 102 so that the UE 102 can simultaneously communicate with the T-DU 174B and receive MBS from the T-DU 174B. After generating the T-DU configuration, the T-DU 174B can send 412A a DU to CU interface message including the T-DU configuration to the CU 172.

In response to receiving 412A the DU to CU interface message, the CU 172 sends 414A an RRC reconfiguration message including the T-DU configuration to the S-DU 174A, which in turn transmits 416A the RRC reconfiguration message to the UE 102. Upon receiving the RRC reconfiguration message, the UE 102 performs 418A a random access procedure with the T-DU 174B via the T-DU configuration.

During or after completing the random access procedure, the UE 102 transmits 420A an RRC reconfiguration complete message to the T-DU 174B, which in turn sends 422A the RRC reconfiguration complete message to the CU 172. As a result, the UE 102 communicates 432A with the T-DU 174B by using the T-DU configuration and communicates 432A with the CU 172 via the T-DU 174B. That is, after applying the T-DU configuration, the UE 102 can simultaneously receive MBS and communicate with the T-DU 174B for unicast data exchange.

In some implementations the CU to DU interface message can be a *UE Context Setup Request* message and the DU to CU interface message can be a *UE Context Setup Response* message responding to the *UE Context Setup Request* message. In other implementations, the CU to DU interface message can be a *UE Context Setup Request* message and the DU to CU interface message can be a *UE Context Modification Required* message. In such implementations, the DU 174 can transmit a *UE Context Setup Response* message to the CU 172 in response to the *UE Context Setup Request* message, and the CU 172 can transmit a *UE Context Modification Confirm* message to the CU 172 in response to the *UE Context Modification Required* message.

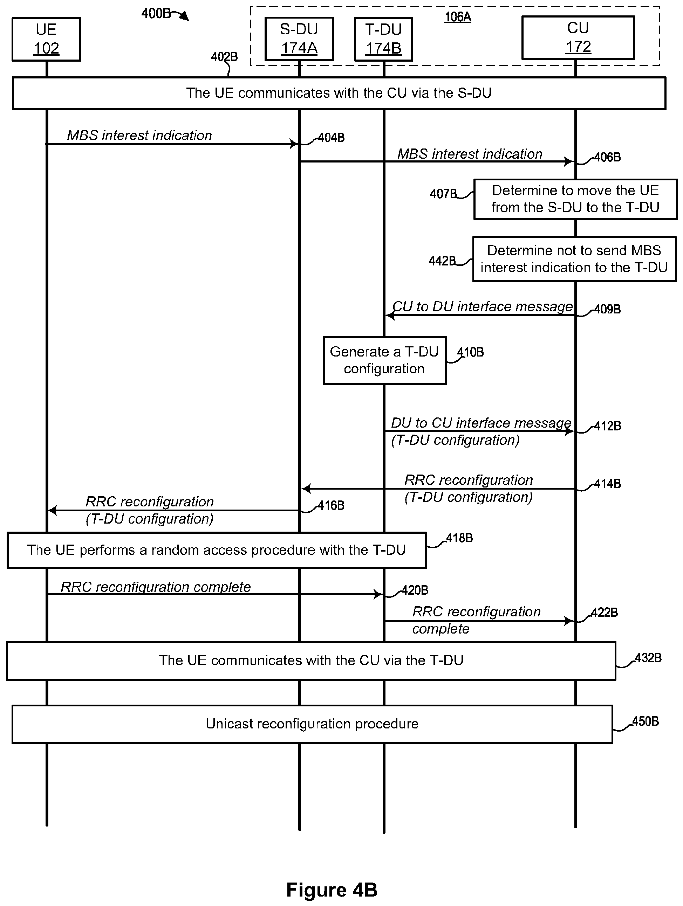

Now referring to Fig. 4B, whereas the RAN 105 of Fig. 4A can prepare the UE 102 to simultaneously receive MBS and unicast information from the RAN 105 during a handover procedure or PSCell change procedure, the RAN 105 of Fig. 4B can prepare the UE 102 to simultaneously receive MBS and unicast information from the RAN 105 after completion of the handover procedure or PSCell change procedure. Otherwise, any of the implementations described above in reference to Figs. 3A, 3B, 3C, and 3D can be applied to scenario 400B of Fig. 4B.

The UE 102 initially communicates 402B UL PDUs and/or DL PDUs with the CU 172 via the S-DU 174A, similar to event 402A.

Later in time, the UE 102 transmits 404A an MBS interest indication (*i.e.,* a first MBS interest indication) to the S-DU 174A, which in turn sends 406B the first MBS interest indication to the CU 172, similar to events 404A and 406A, respectively.

After receiving the first MBS interest indication, the CU 172 determines 407B to change the radio connectivity of the UE 102 from the S-DU 174A to the T-DU 174B (*e.g.,* for a handover procedure or PSCell change procedure), similar to event 407A. However, in contrast to the CU 172 of Fig. 4A, the CU 172 of Fig. 4B determines 442B not to send the first MBS interest indication to the T-DU 174B, to prevent the T-DU 174B from becoming aware that the UE 102 is interested in receiving or is currently receiving MBS data packets. Thus, the CU 172 sends 409B a CU to DU interface message excluding the first MBS interest indication to the T-DU 174B. In response, the T-DU 174B can generate 410B a T-DU configuration for the UE 102 without considering the first MBS interest indication. After generating the T-DU configuration, the T-DU 174B can send 412B a DU to CU interface message including the T-DU configuration to the CU 172, similar to event 412A.

In response to receiving 412B the DU to CU interface message, the CU 172 sends 414B an RRC reconfiguration message including the T-DU configuration to the S-DU 174A, which in turn transmits 416B the RRC reconfiguration message to the UE 102, similar to events 412A and 414A, respectively. Upon receiving the RRC reconfiguration message, the UE 102 performs 418B a random access procedure with the T-DU 174B via the T-DU configuration, similar to event 418A.

During or after completing the random access procedure, the UE 102 transmits 420B an RRC reconfiguration complete message to the T-DU 174B, which in turn sends 422B the RRC reconfiguration complete message to the CU 172, similar to events 420A and 422A, respectively. As a result, the UE 102 communicates 432B with the T-DU 174B by using the T-DU configuration and communicates 432B with the CU 172 via the T-DU 174B. That is, after applying the T-DU configuration, the UE 102 has completed the handover procedure or PSCell change procedure with the T-DU 174B, but cannot yet simultaneously receive MBS and communicate with the T-DU 174B for unicast data exchange, because the T-DU configuration was generated without considering the first MBS interest indication at event 410B. Thus, the CU 172 can then perform a unicast reconfiguration procedure 450B with the T-DU 174B, similar to the manner in which the CU 172 of Fig. 3A performs the unicast reconfiguration procedure 350A with the DU 174. Accordingly, the T-DU 174B can generate and provide a T-DU configuration considering the first MBS interest indication to the UE 102, so that the UE 102 can be configured to simultaneously receive MBS and communicate with the T-DU 174B for unicast data exchange upon completion of the unicast reconfiguration procedure 450B.

In some implementations, the CU 172 generates 409B the CU to DU interface message considering the first MBS interest indication as described for Fig. 3B. In such implementations, the CU 172 may not perform the unicast reconfiguration procedure 450B with the T-DU 174B and the UE 102.

Now referring to Fig. 5A, whereas the RAN 105 of Fig. 4A can prepare the UE 102 to simultaneously receive MBS and unicast information from the RAN 105 during a handover from an S-DU to a T-DU of the same base station, the RAN 105 of Fig. 5A can prepare the UE 102 to simultaneously receive MBS and unicast information from the RAN 105 during a handover from a source base station (*e.g*., S-BS 104) to a target base station (*e.g.,* T-BS 106A). Otherwise, any of the implementations described above in reference to Figs. 3A, 3B, 3C, and 3D can be applied to scenario 500A of Fig. 5A.

The UE 102 initially operates in a state (*e.g*., connected state) in which there is an active radio connection between the UE 102 and the S-BS 104. That is, the UE 102 communicates 502A UL PDUs and/or DL PDUs with the S-BS 104. Later in time, the UE 102 transmits 504A an MBS interest indication (*i.e.,* a first MBS interest indication) to the S-BS 104.

After receiving the first MBS interest indication, the S-BS 104 determines 507A to handover the UE 102 from the S-BS 104 to the T-BS 106A, which in some implementations, includes a T-DU 174 and a T-CU 172. Thus, the S-BS 104 sends 552A a Handover Request message including the first MBS interest indication to the T-BS 106A (*e.g.,* the T-CU 172). In some implementations, in response, the T-CU 172 can send 508A a CU to DU interface message including the first MBS interest indication to the T-DU 174, similar to event 408A. In turn, the T-BS 106A (*e.g.,* the T-DU 174) can generate 510A a T-DU configuration for the UE 102 considering the first MBS interest indication, similar to event 410A. For example, the T-DU 174 can generate 510A the T-DU configuration for the UE 102 so that the UE 102 can simultaneously communicate with the T-DU 174 and receive MBS from the T-DU 174. After generating the T-DU configuration, the T-DU 174 can send 512A a DU to CU interface message including the T-DU configuration to the T-CU 172, similar to event 412A.

In response to receiving 512A the DU to CU interface message, the T-BS 106A (*e.g.,* the T-CU 172) generates 513A a handover command message including the T-DU configuration, and sends 514A a Handover Request Acknowledge message including the handover command message to the S-BS 104. In turn, the S-BS 104 transmits 516A the handover command message to the UE 102. Upon receiving the handover command message, the UE 102 performs 518A a random access procedure with the T-DU 174 via the T-DU configuration, similar to event 418A.

During or after completing the random access procedure, the UE 102 transmits 520A a Handover Complete message to the T-BS 106A (*e.g.,* T-DU 174). In some implementations, the T-DU 174 sends 522A the Handover Complete message to the T-CU 172. As a result, the UE 102 communicates 532A with the T-BS 106A (*e.g.,* the T-DU 174) by using the T-DU configuration and, in some implementations, communicates 532A with the T-CU 172 via the T-DU 174. That is, after applying the T-DU configuration, the UE 102 can simultaneously receive MBS and communicate with the T-BS 106A (*e.g.,* the T-DU 174) for unicast data exchange.

In some implementations, if the base station 106A is a gNB, the handover command message can be an *RRCReconfiguration* message, and the Handover Complete message can be an *RRCReconfigurationComplete* message. In some implementations, if the base station 106A is an eNB or an ng-eNB, the handover command message can be an *RRCConnectionReconfiguration* message, and the Handover Complete message can be an *RRCConnectionReconfigurationComplete* message.

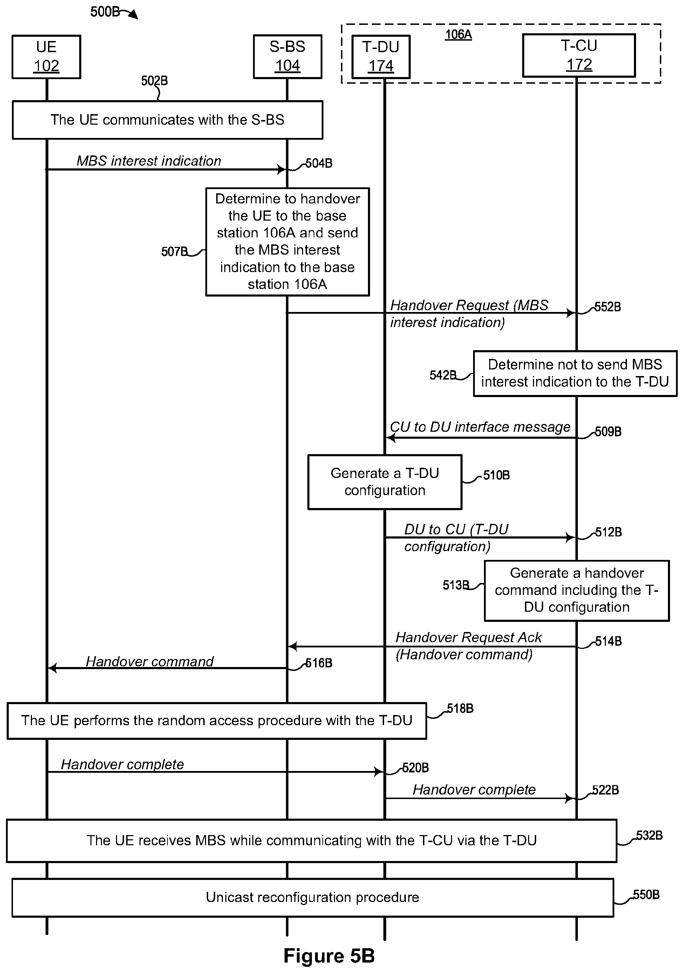

Now referring to Fig. 5B, whereas the RAN 105 of Fig. 5A can prepare the UE 102 to simultaneously receive MBS and unicast information from the RAN 105 during a handover from a source base station (*e.g.,* S-BS 104) to a target base station (*e.g.,* T-BS 106A), the RAN 105 of Fig. 5B can prepare the UE 102 to simultaneously receive MBS and unicast information from the RAN 105 after completion of the handover procedure. Otherwise, any of the implementations described above in reference to Figs. 3A, 3B, 3C, and 3D can be applied to scenario 500B of Fig. 5B.

The UE 102 initially communicates 502B UL PDUs and/or DL PDUs with the S-BS 104, similar to event 502A. Later in time, the UE 102 transmits 504B an MBS interest indication (*i.e.,* a first MBS interest indication) to the S-BS 104, similar to event 504A.

After receiving the first MBS interest indication, the S-BS 104 determines 507B to handover the UE 102 from the S-BS 104 to the T-BS 106A, which in some implementations, includes a T-DU 174 and a T-CU 172, similar to event 507A. Thus, the S-BS 104 sends 552B a Handover Request message including the first MBS interest indication to the T-BS 106A (*e.g.,* the T-CU 172), similar to event 552A. In some implementations, in response, the T-CU 172 determines 542B not to send the first MBS interest indication to the T-DU 174, similar to event 442B, to prevent the T-DU 174 from becoming aware that the UE 102 is interested in receiving or is currently receiving MBS data packets. Thus, the T-CU 172 sends 509B a CU to DU interface message excluding the first MBS interest indication to the T-DU 174, similar to event 409B. In turn, the T-BS 106A (*e.g.,* the T-DU 174) can generate 510B a T-DU configuration for the UE 102 without considering the first MBS interest indication, similar to event 410B. After generating the T-DU configuration, the T-DU 174 can send 512B a DU to CU interface message including the T-DU configuration to the T-CU 172, similar to event 412B.

In response to receiving 512B the DU to CU interface message, the T-BS 106A (*e.g.,* the T-CU 172) generates 513B a handover command message including the T-DU configuration, and sends 514B a Handover Request Acknowledge message including the handover command message to the S-BS 104, similar to events 513A and 514A, respectively. In turn, the S-BS 104 transmits 516B the handover command message to the UE 102, similar to event 516A. Upon receiving the handover command message, the UE 102 performs 518B a random access procedure with the T-DU 174 via the T-DU configuration, similar to event 418B.

During or after completing the random access procedure, the UE 102 transmits 520B a Handover Complete message to the T-BS 106A (*e.g.,* T-DU 174), similar to event 520A In some implementations, the T-DU 174 sends 522B the Handover Complete message to the T-CU 172, similar to event 522A. As a result, the UE 102 communicates 532B with the T-BS 106A (*e.g.,* the T-DU 174) by using the T-DU configuration and, in some implementations, communicates 532B with the T-CU 172 via the T-DU 174, similar to event 532A. That is, after applying the T-DU configuration, the UE 102 has completed the handover procedure with the T-BS 106A (*e.g.,* the T-DU 174), but cannot yet simultaneously receive MBS and communicate with the T-BS 106A (*e.g.,* the T-DU 174) for unicast data exchange, because the T-DU configuration was generated without considering the first MBS interest indication at event 510B. Thus, in some implementations, the T-CU 172 can then perform a unicast reconfiguration procedure 550B with the T-DU 174, similar to the manner in which the CU 172 of Fig. 4B performs the unicast reconfiguration procedure 450B with the T-DU 174B. Accordingly, the T-BS 106A (*e.g.,* the T-DU 174) can generate and provide a T-DU configuration considering the first MBS interest indication to the UE 102, so that the UE 102 can be configured to simultaneously receive MBS and communicate with the T-BS 106A (*e.g.,* the T-DU 174) for unicast data exchange upon completion of the unicast reconfiguration procedure 550B.

In some implementations, the T-CU 172 generates 509B the CU to DU interface message considering the first MBS interest indication as described for Fig. 3B. In such implementations, the T-CU 172 may not perform the unicast reconfiguration procedure 550B with the T-DU 174 and the UE 102.

Now referring to a scenario 600 illustrated in Fig. 6, the UE 102 initially operates in a connected state, or more generally in a state in which there is an active radio connection between the UE 102 and the base station 106A, which includes a master DU (M-DU) 174A and a CU 172. That is, the UE 102 communicates 602 UL PDUs and/or DL PDUs with the CU 172 via the M-DU 174A. In some implementations, the UE 102 is in SC with the base station 106A operating as an MN. In other implementations, the UE 102 is in DC with the CU 172 via the M-DU 174A and secondary DU (S-DU) 174B, where the base station 106A operates as either an MN or SN.

Later in time, the UE 102 transmits 604 an MBS interest indication (*i.e.,* a first MBS interest indication) to the M-DU 174A, which in turn sends 606 the first MBS interest indication to the CU 172, similar to events 304A-304D and 306A-304D, respectively. In some scenarios and implementations, the UE 102 in SC or DC can transmit 604 the first MBS interest indication via SRB1 to the CU 172 via the M-DU 174A or the S-DU 174B when the base station 106A operates as an MN. In other scenarios and implementations, the UE 102 in DC can transmit 604 the first MBS interest indication via SRB3 to the CU 172 via the M-DU 174A or the S-DU 174B when the base station 106A operates as an SN.

In some implementations, after receiving the first MBS interest indication, the CU 172 can determine to reconfigure a radio connection of the UE 102 so that a termination point of the radio connection changes from the M-DU 174A to a different DU (*e.g.,* S-DU 174B). That is, the CU 172 can determine 628 whether to send the first MBS interest indication to the M-DU 174A or S-DU 174B. For example, the CU 172 may select the S-DU 174B in view of the first MBS interest indication (*e.g*., when the first MBS interest indication conveys that the UE 102 desires to receive MBS on a particular carrier frequency, the S-DU 174B operates on the particular carrier frequency, and the M-DU 174A does not operate on the particular carrier frequency). If the CU 172 determines 628 to send the first MBS interest indication to the M-DU 174A, the CU 172 can perform a unicast reconfiguration procedure 650 with the M-DU 174A, similar to the manner in which the CU 172 of Figs. 3A-3D performs the unicast reconfiguration procedure 350A, 351B, 352C, or 353D with the DU 174. Accordingly, the M-DU 174A can generate and provide an M-DU configuration considering the first MBS interest indication to the UE 102, so that the UE 102 can be configured to simultaneously receive MBS and communicate with the M-DU 174A for unicast data exchange upon completion of the unicast reconfiguration procedure 650.

If the CU 172 determines 628 to send the first MBS interest indication to the S-DU 174B, the CU 172 can perform a unicast reconfiguration procedure 651 with the S-DU 174B, similar to the manner in which the CU 172 of Figs. 3A-3D performs the unicast reconfiguration procedure 350A, 351B, 352C, or 353D with the DU 174. Accordingly, the S-DU 174B can generate and provide an S-DU configuration considering the first MBS interest indication to the UE 102, so that the UE 102 can be configured to simultaneously receive MBS and communicate with the S-DU 174B for unicast data exchange upon completion of the unicast reconfiguration procedure 651.

Now referring to a scenario 700 illustrated in Fig. 7, the UE 102 initially operates in a connected state, or more generally in a state in which there is an active radio connection between the UE 102 and the base station 104, which includes a M-DU 174A and a M-CU 172A. That is, the UE 102 communicates 702 UL PDUs and/or DL PDUs with the M-CU 172A via the M-DU 174A. In some implementations, the UE 102 is in SC with base station 104, where the base station 104 operates as an MN. In other implementations, the UE 102 is in DC with base station 104 and base station 106A, where the base station 104 operates as an MN, and the base station 106A operates as an SN. The base station 106A can include an S-DU 174B and an S-CU 172B. That is, the UE 102 communicates 702 UL PDUs and/or DL PDUs with the base station 104 and base station 106A. In yet some implementations, the UE 102 is in DC with base station 104 and base station 106B (not shown in Fig. 7), where the base station 104 operates as an MN, and the base station 106B operates as an SN. That is, the UE 102 communicates 702 UL PDUs and/or DL PDUs with the base station 104 and base station 106B.

Later in time, the UE 102 transmits 704 an MBS interest indication (*i.e.,* a first MBS interest indication) to the M-DU 174A, which in turn sends 706 the first MBS interest indication to the M-CU 172A, similar to events 304A-304D and 306A-304D, respectively.

In some implementations, after receiving the first MBS interest indication, the M-CU 172A can determine whether to configure another base station (*e.g*., base station 106) as an SN. That is, the M-CU 172A can determine 728 whether to send the first MBS interest indication to the base station 106A (*e.g.,* the S-CU 172B). For example, the M-CU 172A may select the S-CU 172B in view of the first MBS interest indication (*e.g.*, when the first MBS interest indication conveys that the UE 102 desires to receive MBS on a particular carrier frequency, the S-CU 172B operates on the particular carrier frequency, and the M-DU 174A does not operate on the particular carrier frequency).

If the M-CU 172A determines 728 to not send the first MBS interest indication to the base station 106A, *e.g.,* after determining that the MN 104 supports the desired particular carrier frequency indicated in the first MBS interest indication, the M-CU 172A can perform a unicast reconfiguration procedure 750 with the M-DU 174A, similar to the manner in which the CU 172 of Figs. 3A-3D performs the unicast reconfiguration procedure 350A, 351B, 352C, or 353D with the DU 174. Accordingly, the M-DU 174A can generate and provide an M-DU configuration considering the first MBS interest indication to the UE 102, so that the UE 102 can be configured to simultaneously receive MBS and communicate with the M-DU 174A for unicast data exchange upon completion of the unicast reconfiguration procedure 750.

If the M-CU 172A determines 728 to send the first MBS interest indication to the base station 106A, the M-CU 172A can perform a unicast reconfiguration procedure 751 with the S-DU 174B, similar to the manner in which the CU 172 of Figs. 3A-3D performs the unicast reconfiguration procedure 350A, 351B. 352C, or 353D with the DU 174. Accordingly, the S-DU 174B can generate and provide an S-DU configuration considering the first MBS interest indication to the UE 102, so that the UE 102 can be configured to simultaneously receive MBS and communicate with the S-DU 174B for unicast data exchange upon completion of the unicast reconfiguration procedure 751.

In some implementations of the unicast reconfiguration procedure 751, the M-CU 172A transmits 762 an SN Request message (*e.g.,* an *SN Addition Request* message or an *SN Modification Request* message) including the first MBS interest indication to the S-CU 172B. In response, the S-CU 172B performs 780 a DU configuration procedure with the S-DU 174B, similar to event 380A. Accordingly, the S-DU 174B generates a DU configuration for the UE 102 considering the first MBS interest indication.

The S-CU 172B then generates an RRC reconfiguration message including the DU configuration, and sends the RRC reconfiguration message in an SN Request Acknowledge message to the base station 104 (*e.g.,* M-CU 172A). In some implementations, the M-CU 172A sends 714 the RRC reconfiguration message to the M-DU 174A, which in turn sends 716 the RRC reconfiguration message in an RRC container message to the UE 102, similar to events 314A-314D and 316A-316D, respectively.

In some implementations, upon receiving the RRC container message, the UE 102 performs 718 a random access procedure with the S-DU 174B, similar to the manner in which the UE 102 performs 318A-318D a random access procedure with the DU 174.

The UE 102 can transmit 720 an RRC reconfiguration complete message during or after the random access procedure to the M-DU 174A, similar to event 320A. In response, the M-DU 174A can send 722 the RRC reconfiguration complete message to the M-CU 172A, which in turn can send 766 the SN reconfiguration complete message to the base station 106A (*e.g.,* S-CU 172B). As a result, the UE 102 communicates with the S-DU 174B by using the DU configuration and communicates with the S-CU 172B via the S-DU 174B. That is, after applying the DU configuration, the UE 102 can simultaneously receive MBS and communicate with the S-DU 174B for unicast data exchange.

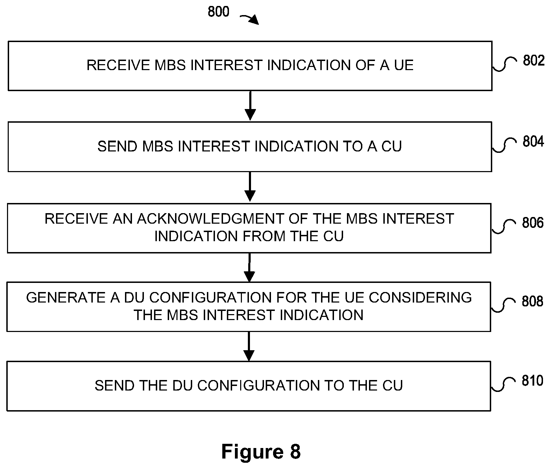

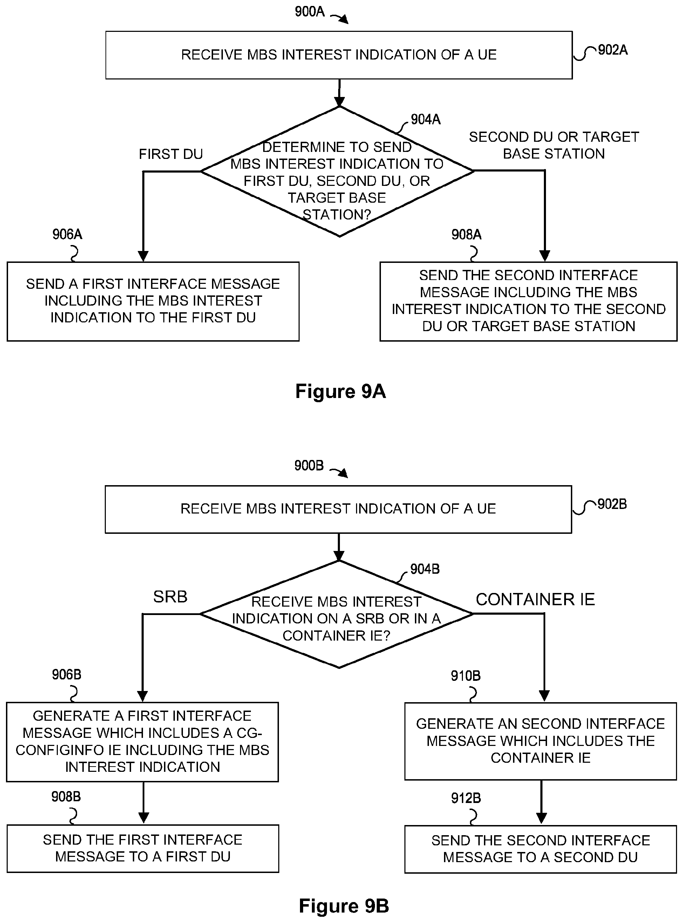

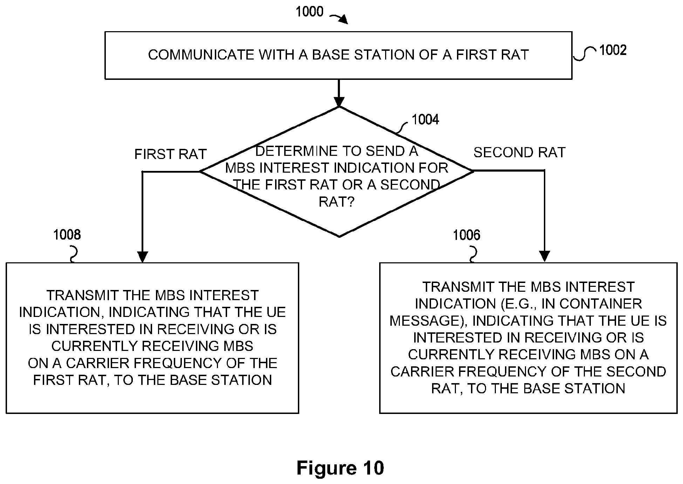

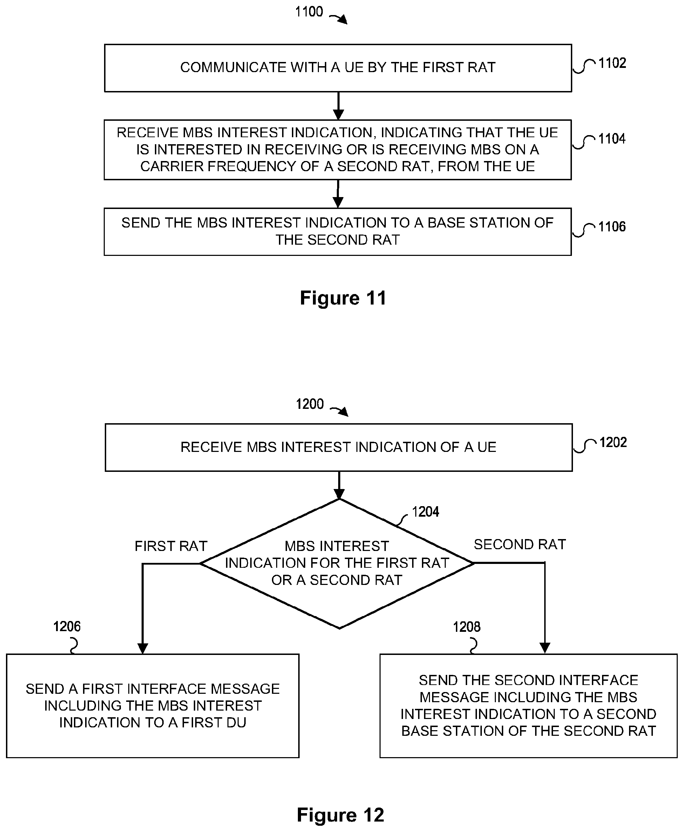

Figs. 8, 9A, and 9B correspond to flow diagrams in which a CU, DU, or certain base station of a RAN handles an MBS interest indication of a UE so that the RAN can prepare the UE to simultaneously receive MBS and unicast information from the RAN. Fig. 10 corresponds to a flow diagram in which a UE provides an MBS interest indication to a RAN so that the RAN can prepare the UE to simultaneously receive MBS and unicast information from the RAN. Figs. 11-14 correspond to flow diagrams in which a RAN handles an MBS interest indication of a UE so that the RAN can prepare the UE to simultaneously receive MBS and unicast information from the RAN. While Figs. 8, 9A-9B, and 10-14 and the accompanying descriptions refer specifically to the UE 102 and base stations of Fig. 1 supporting 5G capabilities, it is understood that the following techniques may be implemented by other components and/or in systems other than the wireless communication system 100 of Fig. 1A to support other technologies, such as 6G radio access and/or 6G core network, for example.

Referring now to Fig. 8, an example method 800 can be implemented in a DU (*e.g.,* DU 174, S-DU 174A, M-DU 174A) of a disaggregated base station (*e.g.,* base station 104, base station 106A) for handling an MBS interest indication of a UE (*e.g.,* UE 102) with a CU (*e.g.,* CU 172, M-CU 172A) of the base station.

At block 802, a DU receives an MBS interest indication of a UE *(e.g.,* in events 304A, 304B, 304C, 304D, 404A, 404B, 604, 704). In some implementations, the DU may receive the MBS interest indication from the UE. In other implementations, the DU may receive the MBS interest indication from a CU.

At block 804, the DU sends the MBS interest indication to a CU (*e.g.,* in events 306A, 306B, 306C, 306D, 406A, 406B, 606, 706).

At block 806, the DU receives an acknowledgement of the MBS interest indication from the CU (*e.g.,* in events 308A, 309B, 342D, 408A, 650, 651, 750). In some implementations, the DU can receive, from the CU, the MBS interest indication as the acknowledgement. In other implementations, the DU can receive, from the CU, a CU to DU message based on the MBS interest indication as the acknowledgment. In yet other implementations, the DU can receive, from the CU, a measurement configuration based on the MBS interest indication as the acknowledgment. In some implementations, the DU that receives the acknowledgement may not be the same DU that sent the MBS interest indication to the CU, such as when the CU determines to perform a handover or PSCell change procedure for the UE and a target DU.

At block 808, *e.g.,* in response to the acknowledgment, the DU generates a DU configuration for the UE considering the MBS interest indication (*e.g.,* in events 310A, 311B, 310C, 321D, 410A, 650, 651, 750).

At block 810, the DU sends the generated DU configuration to the CU (*e.g.,* in events 312A, 312B, 312C, 312D, 412A, 650, 651, 750). In some implementations, the DU can send the DU configuration in a DU to CU interface message to the CU.

Referring now to Fig. 9A, an example method 900A can be implemented in a CU (*e.g.,* CU 172) of a disaggregated base station *(e.g.,* base station 106A, MN 104) for handling an MBS interest indication of a UE (*e.g.,* UE 102) with a DU (*e.g.,* DU 174, S-DU 174A, M-DU 174A, T-DU 174B, S-DU 174B) of the same base station or to another base station (*e.g.*, SN 106A).

At block 902A, the CU receives an MBS interest indication of a UE from a DU (*e.g.,* in events 306A, 306B, 306C, 306D, 406A, 606, 706).

At block 904A, the CU determines whether to send the MBS interest indication to the same DU, a different DU of the same base station, or another base station (*e.g.*, in events 628, 728). For example, the CU may determine to send the MBS interest indication to a different DU in certain DU change scenarios (*e.g.*, handover or PSCell change as described in Figs. 4A, 6) in which a UE transmits an MBS interest indication to the CU via a source DU and then the CU determines to change its connection to a target DU. As another example, the CU may determine to send the MBS interest indication to a different base station in scenarios in which the CU *(e.g.,* of an MN) determines to configure the UE to communicate in DC with the CU and another base station (*e.g*., an SN, as described in Fig. 7).

At block 904A, if the CU determines to send the MBS interest indication to the same DU, the CU at block 906A sends a first interface message including the MBS interest indication or otherwise considering the MBS interest indication to the same DU (*e.g.,* in events 308A, 309B, 317D, 650, 750). Otherwise, if at block 904A the CU determines to send the MBS interest indication to a different DU or another base station, the CU at block 908A sends a second interface message including the MBS interest indication to the different DU or the other base station (*e.g.*, in events 408A, 651, 762). In some implementations, the first interface message and the second interface message can be a CU to DU interface message and SN Request message, respectively.

Referring now to Fig. 9B, an example method 900B can be implemented in a CU (*e.g.,* CU 172) of a disaggregated base station (*e.g.,* base station 106A) for handling an MBS interest indication of a UE (*e.g.,* UE 102) with a DU (*e.g.,* DU 174, S-DU 174A, M-DU 174A, T-DU 174B) of the same base station.

At block 902B, the CU receives an MBS interest indication of a UE from a DU (*e.g.,* in events 306A, 306B, 306C, 306D, 406A, 606, 706).

At block 904B, the CU determines whether the DU provided the MBS interest indication of the UE on an SRB or in a container IE. For example, if the CU receives a DU to CU interface message including the MBS interest indication from the DU, the CU determines that the DU provided the MBS interest indication on an SRB. The DU to CU message can be a *UL RRC Message Transfer* message or a *UE Context Modification Required* message including a RRC-Container IE including the MBS interest indication or a PDCP PDU including the MBMS interest indication. If the CU receives the MBS interest indication from another network node (*e.g.,* another base station, another CU, or a core network) via an X2, Xn, S1 or NG interface, the CU determines that the DU provided the MBS interest indication of the UE in a container IE.

At block 904B, if the CU determines that the DU provided the MBS interest indication of the UE on an SRB, the CU at block 906B generates a first interface message, which includes a *CG-ConfigInfo* IE that includes the MBS interest indication or otherwise considers the MBS interest indication, and subsequently sends 908B the first interface message to the same DU (*e.g.,* in events 308A, 309B, 317D, 650, 750). In some implementations, the CU at block 906B may not include the MBS interest indication in the *CG-Configlnfo* IE, and instead include the MBS interest indication in the first interface message. Otherwise, if at block 904B the CU determines to send the MBS interest indication to a different DU, the CU at block 910B generates a second interface message, which includes a container IE (*e.g., CG-ConfigInfo* or *HandoverPreparationInformation* IE) that includes the MBS interest indication, and subsequently sends 912B the second interface message to the different DU (*e.g.,* in events 408A, 651). In some implementations, the first interface message and the second interface message can be a CU to DU interface message and SN Request message, respectively.

Referring now to Fig. 10, an example method 1000 can be implemented in a UE (*e.g.,* UE 102) for specifying, in an MBS interest indication, a carrier frequency of a RAT on which the UE is interested in receiving MBS, and transmitting the MBS interest indication to a base station (*e.g.,* the base station 106A, the MN 104, or SN 106A).

At block 1002, the UE communicates (*e.g.*, in SC or DC) with a base station that operates in accordance with a first RAT (*e.g.,* in events 302A, 302B, 302C, 302D, 402A, 402B, 602, 702). The first RAT can be EUTRA or NR, for example.

At block 1004, the UE determines whether to send, to the base station of the first RAT, an MBS interest indication to the base station indicating that the UE is interested in receiving or is currently receiving MBS on a carrier frequency of the first RAT (*e.g.,* EUTRA, NR) or a different (*i.e.,* second) RAT (*e.g.,* NR, EUTRA, respectively). In some implementations, the MBS interest indication can comply to a format defined for the respective first RAT and the second RAT. For example, if the first RAT or second RAT is EUTRA, the MBS interest indication can be a EUTRA *MBMSInterestIndication* message. If the first RAT or second RAT is NR, the MBS interest indication can be an NR RRC message (*e.g.,* an *MBMSInterestIndication, MBSInterestIndication,* or *UEAssistanceInformation* message). In some implementations, the UE can transmit the MBS interest indication on an SRB (*e.g.,* SRB1) to the base station.

If the UE at block 1004 determines to send an MBS interest indication indicating that the UE is interested in receiving or is currently receiving MBS on a particular carrier frequency of the second RAT, the UE at block 1006 transmits the MBS interest indication to the base station of the first RAT (*e.g.,* in events 304A, 306A, 304B, 306B, 304C, 306C, 304D, 306D, 404A, 406A, 404B, 406B, 604, 606, 704, 706). In this way, the base station of the first RAT can be aware that the UE desires to receive MBS on a particular carrier frequency of the second RAT, and in some implementations, the base station of the first RAT can send the MBS interest indication to another base station that operates in accordance with the second RAT. In some implementations, the UE transmits the MBS interest indication in an RRC container message to the base station. The base station can forward the MBS interest indication to the base station of the second RAT. In some implementations, if the first RAT is EUTRA, the RRC container message can be a EUTRA *MBMSInterestIndication* message. In some implementations, the UE can transmit the RRC container message on an SRB (e*.g.,* SRB1 or SRB3) to the base station. In some implementations, the RRC container message is a first *ULInformationTransferMRDC* message. In other implementations, the RRC container message is a first *ULInformationTransferIRAT* message. The UE can send another RRC container message (*i.e.,* a second RRC container message) to the base station. The second RRC container message can be a second *ULInformationTransferMRDC* message or a second *ULInformationTransferIRAT* message. For example, the UE includes a *SidelinkUEInformation* message, a *UEAssistanceInformation* message, or a *MeasurementReport* message in the second *ULInformationTransferIRAT* message. In another example, the UE includes a *SCGFailureInformation* message or a *MeasurementReprot* message in the second *ULInformationTransferMRDC* message.

In other implementations, rather than transmitting the MBS interest indication to the base station of the first RAT at block 1006, the UE alternatively can transmit the MBS interest indication to the base station of the second RAT. For example, if UE is communicating in DC with the base station of the first RAT (*e.g.,* MN 104) and the base station of the second RAT (*e.g.,* SN 106A), the UE can transmit the MBS interest indication to the base station of the second RAT instead of the base station of the first RAT. In one implementation, the UE transmits the MBS interest indication to the base station of the second RAT on an SRB (*e.g.,* SRB3) without using the RRC container message.

If the UE at block 1004 determines to send an MBS interest indication indicating that the UE is interested in receiving or is currently receiving MBS on a particular carrier frequency of the first RAT, the UE at block 1008 transmits the MBS interest indication to the base station of the first RAT. In this way, the base station of the first RAT can be aware that the UE desires to receive MBS on a particular carrier frequency or on a particular MBS DL BWP of the first RAT (*i.e.,* a different carrier frequency or MBS DL BWP than the one in which the UE communicates with the base station of the first RAT at block 1002), and in some implementations, the base station can reconfigure the UE to communicate on the particular carrier frequency or MBS DL BWP of the first RAT as indicated in the MBS interest indication. In some implementations, the UE transmits the MBS interest indication to the base station without using an RRC container message to include the MBS interest indication.

Fig. 11 is a flow diagram depicting a method 1100 for processing an MBS interest indication of a UE (*e.g.,* UE 102), which may be implemented by a base station (*e.g.,* the source base station 104 or MN 104) that operates in accordance with a first RAT (*e.g.,* EUTRA, NR).

At block 1102, the base station of the first RAT communicates with a UE (*e.g.,* in events 502A, 502B, 702).

At block 1104, the base station of the first RAT receives, from the UE, an MBS interest indication, which conveys that the UE is interested in receiving or is currently receiving MBS on a carrier frequency of a second RAT (*e.g.,* in events 504A, 504B, 704, 706).

At block 1106, the base station of the first RAT sends the MBS interest indication to a base station of the second RAT (*e.g.,* in events 552A, 552B, 762), so that the base station of the second RAT can configure the UE to receive MBS on the carrier frequency of the second RAT.

In some implementations, the base station of the first RAT sends an SN Request message including the MBS interest indication to the base station of the second RAT. The SN Request message can be an *SN Addition Request* message or an *SN Modification Request* message. In some implementations, the base station of the first RAT may generate a *CG-ConfigInfo* IE including the MBS interest indication and include the *CG-ConfigInfo* IE in the SN Request message. In other implementations, the base station of the first RAT sends an *RRC Transfer* message including the MBS interest indication to the base station of the second RAT. The MBS interest indication can comply to a format defined for the second RAT as described above. The base station of the first RAT may include the MBS interest indication in an *RRC Container* IE instead of a *CG-ConfigInfo* IE and include the *RRC Container* IE in the *RRC Transfer* message.

Fig. 12 is a flow diagram depicting a method 1200 for processing an MBS interest indication of a UE (*e.g.,* UE 102), which may be implemented by a CU (*e.g.,* CU 172) of a first base station (*e.g.,* the source base station 104 or MN 104) that operates in accordance with a first RAT (*e.g*., EUTRA, NR).

At block 1202, a first base station receives an MBS interest indication (*e.g.,* in events 306A, 306B, 306C, 306D, 406A, 406B, 606, 706). For example, the first base station can receive the MBS interest indication from the UE or another base station.

At block 1204, the first base station determines whether the MBS interest indication conveys that the UE is interested in receiving or is currently receiving MBS on a particular carrier frequency of the first RAT (*e.g.,* EUTRA, NR) or a second RAT (*e.g.,* NR, EUTRA, respectively). If the first base station determines that the MBS interest indication conveys that the UE is interested in receiving or is currently receiving MBS on a particular carrier frequency of the first RAT, the first base station at block 1206 sends a first interface message that includes the MBS interest indication or otherwise considers the MBS interest indication to a first DU (*e.g.,* DU 174) of the first base station (*e.g.,* in events 308A, 309B, 313C, 317D, 408A, 409B, 650, 651, 606, 760).

Otherwise, if the first base station determines that the MBS interest indication conveys that the UE is interested in receiving or is currently receiving MBS on a particular carrier frequency of the second RAT, the first base station at block 1208 sends a second interface message including the MBS interest indication to a second base station that operates in accordance with the second RAT (*e.g.,* in event 762).

In some implementations, the first interface message can be a CU to DU message described above. In some implementations, the second interface message can be an SN Request message described above. In some implementations, the MBS interest indication can comply to a format defined for the first RAT or the second RAT as described above.

In some implementations, based on the MBS interest indication, the second base station (*e.g.*, an SN) can generate an RRC reconfiguration message including configuration parameters configuring a serving cell operated on the carrier frequency for the UE, and include the RRC reconfiguration message in an *SN Modification Required* message or an *SN Modification Request Acknowledge* message. Then the second base station sends the SN Modification Required message or the *SN Modification Request Acknowledge* to the UE. In turn, the first base station (*e.g*., an MN) transmits the RRC reconfiguration message to the UE and the UE transmits an RRC reconfiguration complete message to the MN in response. The UE applies the configuration parameters to communicate with the SN on the serving cell. The UE may receive MBS on the serving cell while communicating with the second base station on the serving cell. The serving cell can be a PSCell or SCell operated by the second base station for the UE.

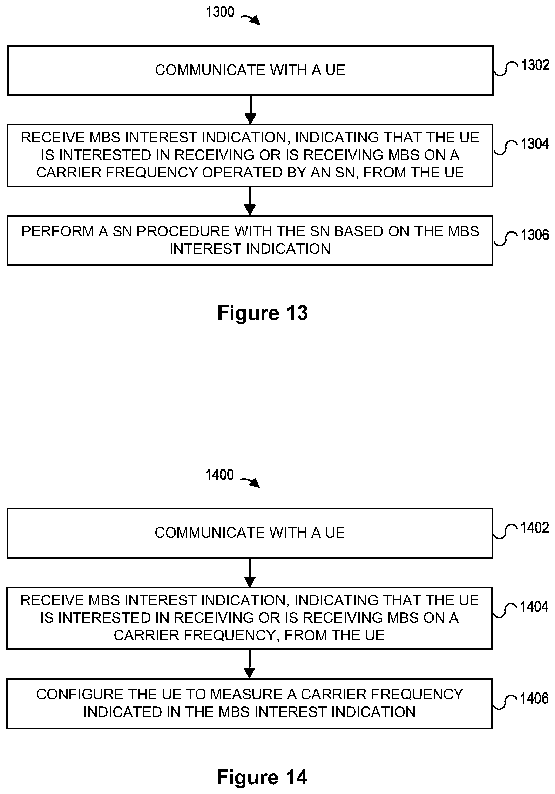

Fig. 13 is a flow diagram depicting a method 1300 for processing an MBS interest indication of a UE (*e.g.,* UE 102), which may be implemented by an MN (*e.g.,* the MN 104).

At block 1302, an MN communicates with a UE (*e.g.,* in event 702).

At block 1304, the MN receives, from the UE, an MBS interest indication, which conveys that the UE is interested in receiving or is currently receiving MBS on a carrier frequency operated by an SN, such as SN 106A (*e.g.,* in event 706).

At block 1306, the MN performs an SN procedure with an SN based on the MBS interest indication (*e.g.*, in event 751).

In some implementations, the SN procedure can be an SN Addition procedure or an SN Modification procedure. In case of the SN Addition procedure, the MN sends an *SN Addition Request* message to the SN, which in turn sends an *SN Addition Request Acknowledge* message to the MN. In case of the SN Modification procedure, the MN sends an *SN Modification Request* message to the SN, which in turn sends an *SN Modification Request Acknowledge* message to the MN.

In some implementations, the MN can generate a configuration restriction information based on the MBS interest indication, and include the configuration restriction information in the *SN Addition Request* message or *SN Modification Request* message. In the configuration restriction information, the MN may restrict the SN to communicate with the UE on a carrier frequency indicated in the MBS interest indication. Based on the configuration restriction information, the SN can generate an RRC reconfiguration message including configuration parameters configuring a serving cell operated on the carrier frequency for the UE, and include the RRC reconfiguration message in the *SN Addition Request Acknowledge* message or *SN Modification Request Acknowledge* message. Then the MN transmits the RRC reconfiguration message to the UE, which in turn transmits an RRC reconfiguration complete message to the MN. The UE applies the configuration parameters to communicate with the SN on the serving cell. The UE may receive MBS on the serving cell while communicating with the SN on the serving cell. The serving cell can be a PSCell or SCell operated by the SN for the UE. In some implementations, the MN and SN use the same RAT. In other implementations, the MN and SN use different RATs.

Fig. 14 is a flow diagram depicting a method 1400 for configuring a UE (*e.g.,* UE 102) to measure a carrier frequency indicated in an MBS interest indication, which may be implemented by a base station (*e.g.,* the base station 106A, the MN 104, or the SN 106A).

At block 1402, a base station communicates with a UE (*e.g.,* in events 302A, 302B, 302C, 302D, 402A, 402B, 502A, 502B, 602, 702).

At block 1404, the base station receives, from the UE, an MBS interest indication, which conveys that the UE is interested in receiving or is currently receiving MBS on a certain carrier frequency (*e.g*., in events 304A, 304B, 304C, 304D, 404A, 404B, 504A, 504B, 604, 704).

At block 1406, the base station configures the UE to measure the carrier frequency indicated in the MBS interest indication (*e.g*., in event 344D).

In some implementations, the base station transmits an RRC reconfiguration message configuring the UE to measure the carrier frequency to the UE. The UE can transmit a measurement report including measurement result(s) for a cell on the carrier frequency. If the measurement result(s) indicates signal strength of the cell that is sufficient for handover, the base station in some implementations can determine to handover the UE to the cell and sends a handover command message to the UE to handover the UE to the cell, as described in Fig. 5A, for example. If the measurement result(s) indicates signal strength of the cell that is sufficient for DC, the base station in other implementations can perform the SN procedure for the UE as described in Fig. 13.

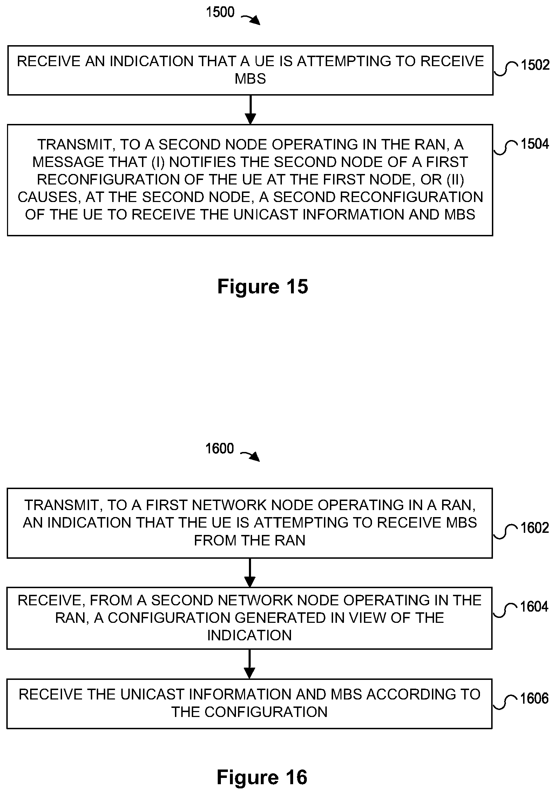

Fig. 15 is a flow diagram depicting a method 1500 for processing an MBS interest indication of a UE (*e.g.,* UE 102), which may be implemented by a first node of a RAN *(e.g.,* RAN 105). The UE is configured to receive unicast information from the RAN. The RAN also includes a second node. The first node is a CU (*e.g.,* CU 172, T-CU 172) of a distributed base station, and the second node is a DU (*e.g.,* DU 174, T-DU 174B, T-DU 174, M-DU 174A, S-DU 174B) of the same or another distributed base station.

At block 1502, a first node receives an indication that the UE is attempting to receive MBS (*e.g.,* in events 306A, 306B, 304C, 306D, 406A, 406B, 552A, 552B, 606, 706). In some implementations, the indication can include a carrier frequency on which the UE is attempting to receive MBS. In some implementations, the first node receives the indication from the second node.

At block 1504, the first node transmits, to a second node operating in the RAN, a message that (i) notifies the second node of a first reconfiguration of the UE at the first node, or (ii) causes, at the second node, a second reconfiguration of the UE to receive the unicast information and MBS (*e.g.,* in events 308A, 309B, 317D, 408A, 450B, 508A, 550B, 650, 651, 750, 762). For example, with reference to Fig. 3D, a first node (*e.g.,* CU 174) can transmit a message (*e.g.,* in event 342D) that notifies a second node (*e.g.,* DU 174) of the first reconfiguration of the UE at the first node *(e.g.,* the measurement configuration generated at event 340D in view of the MBS interest indication). As another example, with reference to Fig. 3A, a first node (*e.g.,* CU 172) can transmit a message (*e.g.,* in event 308A) that causes, at the second node (*e.g.,* DU 174), the second reconfiguration of the UE to receive the unicast information and MBS (*e.g.,* the DU configuration generated at event 310A in view of the MBS interest indication). In some implementations, the message can be an interface message with the indication. In other implementations, the message can be an interface message formatted in view of the indication.

Fig. 16 is a flow diagram depicting a method 1600 for providing an MBS interest indication to a first network node (*e.g.,* DU 174, S-DU 174A, S-BS 104, base station 106A, M-DU 174A, MN 104) of a RAN (*e.g.,* RAN 105), which can be implemented in a UE (*e.g.,* UE 102). The UE is configured to receive unicast information from the RAN.

At block 1602, a UE transmits, to a first network node operating in the RAN, an indication that the UE is attempting to receive MBS from the RAN (*e.g.,* in events 304A, 304B, 304C, 304D, 404A, 404B, 504A, 504B, 604, 704).

At block 1604, the UE receives, from a second network node (*e.g.,* CU 172, base station 106A, T-CU 172, MN 104, M-CU 172A, SN 106A, S-CU 172B) operating in the RAN, a configuration generated in view of the indication (*e.g*., in events 314A, 316A, 314B, 316B, 314C, 316C, 314D, 316D, 414A, 416A, 450B, 514A, 516A, 550B, 650, 651, 750, 751).

At block 1606, the UE receives the unicast information and MBS according to the configuration (*e.g*., in events 332A, 332B, 332C, 332D, 432A, 450B, 532A, 550B, 650, 651, 750, 751).

The following additional considerations apply to the foregoing discussion.

A user device in which the techniques of this disclosure can be implemented (*e.g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.,* code stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC)) to perform certain operations. A hardware module may also comprise programmable logic or circuitry (*e.g*., as encompassed within a general-purpose processor or other programmable processor) that is temporarily configured by software to perform certain operations. The decision to implement a hardware module in dedicated and permanently configured circuitry, or in temporarily configured circuitry (*e.g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for (re)configuring the UE to receive MBS through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method performed by a first node operating in a radio access network, RAN (105), for communicating with a user equipment, UE (102), the UE configured to receive unicast information from the RAN, the method **characterized by** comprising:
receiving (1502), by a first node that is a central unit, CU (172), of a first distributed base station (106A), an indication that the UE (102) is attempting to receive multicast and broadcast services, MBS; and
transmitting (1504), by the first node to a second node that is operating in the RAN (105) and that is a distributed unit, DU (174), of the first distributed base station (106A) or of a second distributed base station (106B), a message that (i) notifies the second node of a first reconfiguration of the UE at the first node, or (ii) causes, at the second node, a second reconfiguration of the UE to receive the unicast information and MBS.

2. The method of claim 1, wherein the second node is the DU (174) of the first distributed base station (106A);
the first reconfiguration is a first DU configuration; and
the second reconfiguration is a second DU configuration.

3. The method of claim 2, wherein:
the DU is a target DU (174B) of the first distributed base station (106A), and
the indication is received from a source DU (174A) of the first distributed base station (106A);
the method further comprising, prior to the transmitting:
determining, at the CU (172), to reconfigure a radio connection of the UE (102) with the RAN (105) so that a termination point of the radio connection changes from the source DU (174A) to the target DU (174B); and
generating the message to include a configuration for changing the radio connection.

4. The method of claim 2, wherein:
the first distributed base station (106A) is a target base station;
the indication is received from a source base station (104).

5. The method of claim 2, wherein:
the second node is a first DU (174A, 174B); and
the UE (102) is operating in dual connectivity, DC, with the first DU (174A, 174B) and a second DU (174B, 174A) of the first distributed base station (106A);
the method further comprising:
selecting, by the CU, the first DU (174A, 174B) from among the first DU and the second DU, for transmitting the message to the first DU.

6. The method of any one of the preceding claims, wherein:
the first node supports a first radio interface technology, RAT, and
the second node supports a second RAT.

7. The method of any one of the preceding claims, wherein:
the first node operates as a master node, MN;
the method further comprising:
configuring the second node to operate as a secondary node, SN.

8. The method of any one of the preceding claims, wherein:
the UE (102) is previously configured to receive MBS on a first carrier frequency but not on a second carrier frequency,
the indication includes the second carrier frequency, and
the message causes the second node to configure the UE (102) for receiving MBS on the second carrier frequency.

9. The method of claim 1, wherein:
the second node is the DU of the second distributed base station (106B); and
the UE (102) is reconfigured to receive MBS and operate in dual connectivity, DC, with the first distributed base station (106A) and the second distributed base station (106B) in accordance with the second reconfiguration.

10. A RAN node comprising processing hardware and configured to implement the method of any one of the preceding claims.

11. A method performed by a user equipment, UE (102), configured to receive unicast information from a radio access network, RAN (105), the method **characterized by** comprising:
transmitting (1602), by the UE (102) and to a first network node that is operating in the RAN and that is a central unit, CU (172), of a first distributed base station (106A), an indication that the UE is attempting to receive multicast and broadcast services, MBS, from the RAN (105);
receiving (1604), by the UE (102) and from a second network node that is operating in the RAN (105) and that is a distributed unit, DU (174), of the first distributed base station (106A) or of a second distributed base station (106B), a reconfiguration generated in view of the indication; and
receiving (1606), by the UE (102), the unicast information and MBS according to the reconfiguration.

12. The method of claim 11, wherein the second network node is the DU (174) of the first distributed base station (106A).

13. The method of claim 11, wherein the second network node is the DU of the second distributed base station (106B).

14. The method of any one of claims 11-13, wherein:
the first network node operates as an MN, and
the second network node operates as an SN, to provide dual connectivity, DC, to the UE.

15. A UE comprising processing hardware and configured to implement the method of any one of claims 11-14.

## Patentansprüche

1. Verfahren, das von einem ersten Knoten durchgeführt wird, der in einem Funkzugangsnetzwerk, RAN (radio access network) (105), arbeitet, zum Kommunizieren mit einer Benutzerausrüstung, UE (user equipment) (102), wobei die UE konfiguriert ist, Unicast-Informationen von dem RAN zu empfangen, wobei das Verfahren **dadurch gekennzeichnet ist, dass** es umfasst:
Empfangen (1502), durch einen ersten Knoten, der eine zentrale Einheit, CU (central unit) (172), einer ersten verteilten Basisstation (106A) ist, einer Angabe, dass die UE (102) versucht, Multicast- und Broadcast-Dienste, MBS (multicast and broadcast services), zu empfangen; und
Übertragen (1504), durch den ersten Knoten an einen zweiten Knoten, der in dem RAN (105) arbeitet und der eine verteilte Einheit, DU (distributed unit) (174), der ersten verteilten Basisstation (106A) oder einer zweiten verteilten Basisstation (106B) ist, einer Nachricht, die (i) den zweiten Knoten über eine erste Rekonfiguration der UE an dem ersten Knoten benachrichtigt, oder (ii) an dem zweiten Knoten eine zweite Rekonfiguration der UE bewirkt, um die Unicast-Informationen und MBS zu empfangen.

2. Verfahren nach Anspruch 1, wobei der zweite Knoten die DU (174) der ersten verteilten Basisstation (106A) ist;
die erste Rekonfiguration eine erste DU-Konfiguration ist; und die zweite Rekonfiguration eine zweite DU-Konfiguration ist.

3. Verfahren nach Anspruch 2, wobei:
die DU eine Ziel-DU (174B) der ersten verteilten Basisstation (106A) ist, und
die Angabe von einer Quell-DU (174A) der ersten verteilten Basisstation (106A) empfangen wird;
wobei das Verfahren vor dem Übertragen ferner umfasst:
Bestimmen, an der CU (172), eine Funkverbindung der UE (102) mit dem RAN (105) zu rekonfigurieren, sodass ein Terminierungspunkt der Funkverbindung von der Quell-DU (174A) zu der Ziel-DU (174B) wechselt; und
Erzeugen der Nachricht, sodass sie eine Konfiguration zum Ändern der Funkverbindung beinhaltet.

4. Verfahren nach Anspruch 2, wobei:
die erste verteilte Basisstation (106A) eine Zielbasisstation ist;
die Angabe von einer Quellbasisstation (104) empfangen wird.

5. Verfahren nach Anspruch 2, wobei:
der zweite Knoten eine erste DU (174A, 174B) ist; und
die UE (102) in dualer Konnektivität, DC, mit der ersten DU (174A, 174B) und einer zweiten DU (174B, 174A) der ersten verteilten Basisstation (106A) arbeitet;
wobei das Verfahren ferner umfasst:
Auswählen, durch die CU, der ersten DU (174A, 174B) aus der ersten DU und der zweiten DU zum Übertragen der Nachricht an die erste DU.

6. Verfahren nach einem der vorhergehenden Ansprüche, wobei:
der erste Knoten eine erste Funkschnittstellentechnologie, RAT, unterstützt, und
der zweite Knoten eine zweite RAT unterstützt.

7. Verfahren nach einem der vorhergehenden Ansprüche, wobei:
der erste Knoten als ein Masterknoten, MN (master node), arbeitet;
wobei das Verfahren ferner umfasst:
Konfigurieren des zweiten Knotens, um als ein sekundärer Knoten, SN (secondary node), zu arbeiten.

8. Verfahren nach einem der vorhergehenden Ansprüche, wobei:
die UE (102) zuvor konfiguriert ist, MBS auf einer ersten Trägerfrequenz, aber nicht auf einer zweiten Trägerfrequenz zu empfangen,
die Angabe die zweite Trägerfrequenz einschließt, und
die Nachricht bewirkt, dass der zweite Knoten die UE (102) zum Empfangen von MBS auf der zweiten Trägerfrequenz konfiguriert.

9. Verfahren nach Anspruch 1, wobei:
der zweite Knoten die DU der zweiten verteilten Basisstation (106B) ist; und
die UE (102) rekonfiguriert wird, um MBS zu empfangen und in dualer Konnektivität, DC, mit der ersten verteilten Basisstation (106A) und der zweiten verteilten Basisstation (106B) gemäß der zweiten Rekonfiguration zu arbeiten.

10. RAN-Knoten, der Verarbeitungshardware umfasst und konfiguriert ist, das Verfahren nach einem der vorhergehenden Ansprüche zu implementieren.

11. Verfahren, das von einer Benutzerausrüstung, UE (102), durchgeführt wird, die konfiguriert ist, Unicast-Informationen von einem Funkzugangsnetzwerk, RAN (105), zu empfangen, wobei das Verfahren **dadurch gekennzeichnet ist, dass** es umfasst:
Übertragen (1602), durch die UE (102) und an einen ersten Netzwerkknoten, der in dem RAN arbeitet und der eine zentrale Einheit, CU (172), einer ersten verteilten Basisstation (106A) ist, einer Angabe, dass die UE versucht, Multicast- und Broadcast-Dienste, MBS, von dem RAN (105) zu empfangen;
Empfangen (1604), durch die UE (102) und von einem zweiten Netzwerkknoten, der in dem RAN (105) arbeitet und der eine verteilte Einheit, DU (174), der ersten verteilten Basisstation (106A) oder einer zweiten verteilten Basisstation (106B) ist, einer Rekonfiguration, die unter Berücksichtigung der Angabe erzeugt wurde; und
Empfangen (1606), durch die UE (102), der Unicast-Informationen und MBS gemäß der Rekonfiguration.

12. Verfahren nach Anspruch 11, wobei der zweite Netzwerkknoten die DU (174) der ersten verteilten Basisstation (106A) ist.

13. Verfahren nach Anspruch 11, wobei der zweite Netzwerkknoten die DU der zweiten verteilten Basisstation (106B) ist.

14. Verfahren nach einem der Ansprüche 11-13, wobei:
der erste Netzwerkknoten als ein MN arbeitet, und
der zweite Netzwerkknoten als ein SN arbeitet, um der UE duale Konnektivität, DC (dual connectivity), bereitzustellen.

15. UE, das Verarbeitungshardware umfasst und dazu konfiguriert ist, das Verfahren nach einem der Ansprüche 11-14 zu implementieren.

## Revendications

1. Procédé réalisé par un premier nœud fonctionnant dans un réseau d'accès radio, RAN (105), pour communiquer avec un équipement utilisateur, UE (102), l'UE étant configuré pour recevoir des informations de diffusion individuelle du RAN, le procédé étant **caractérisé en ce qu'**il comprend :
la réception (1502), par un premier nœud qui est une unité centrale, CU (172), d'une première station de base distribuée (106A), d'une indication selon laquelle l'UE (102) tente de recevoir des services de multidiffusion et de diffusion, MBS ; et
la transmission (1504), par le premier nœud à un second nœud fonctionnant dans le RAN (105) et qui est une unité distribuée, DU (174), de la première station de base distribuée (106A) ou d'une seconde station de base distribuée (106B), d'un message qui (i) notifie au second nœud une première reconfiguration de l'UE au niveau du premier nœud, ou (ii) provoque, au niveau du second nœud, une seconde reconfiguration de l'UE pour recevoir les informations de diffusion individuelle et MBS.

2. Procédé selon la revendication 1, dans lequel le second nœud est la DU (174) de la première station de base distribuée (106A) ;
la première reconfiguration est une première configuration DU ; et
la seconde reconfiguration est une seconde configuration DU.

3. Procédé selon la revendication 2, dans lequel :
la DU est une DU cible (174B) de la première station de base distribuée (106A), et
l'indication est reçue d'une DU source (174A) de la première station de base distribuée (106A) ;
le procédé comprenant également, avant la transmission :
la détermination, au niveau de la CU (172), de reconfigurer une connexion radio de l'UE (102) avec le RAN (105) de sorte qu'un point de terminaison de la connexion radio passe de la DU source (174A) à la DU cible (174B) ; et
la génération du message pour inclure une configuration pour modifier la connexion radio.

4. Procédé selon la revendication 2, dans lequel :
la première station de base distribuée (106A) est une station de base cible ;
l'indication est reçue d'une station de base source (104).

5. Procédé selon la revendication 2, dans lequel :
le second nœud est une première DU (174A, 174B) ; et
l'UE (102) fonctionne en double connectivité, DC, avec la première DU (174A, 174B) et une seconde DU (174B, 174A) de la première station de base distribuée (106A) ;
le procédé comprenant également :
la sélection, par la CU, de la première DU (174A, 174B) parmi la première DU et la seconde DU, pour transmettre le message à la première DU.

6. Procédé selon l'une quelconque des revendications précédentes, dans lequel :
le premier nœud prend en charge une première technologie d'interface radio, RAT, et
le second nœud prend en charge une seconde RAT.

7. Procédé selon l'une quelconque des revendications précédentes, dans lequel :
le premier nœud fonctionne comme un nœud maître, MN ;
le procédé comprenant également :
la configuration du second nœud pour qu'il fonctionne comme un nœud secondaire, SN.

8. Procédé selon l'une quelconque des revendications précédentes, dans lequel :
l'UE (102) est préalablement configurée pour recevoir les MBS sur une première fréquence porteuse mais pas sur une seconde fréquence porteuse,
l'indication comporte la seconde fréquence porteuse, et
le message amène le second nœud à configurer l'UE (102) pour recevoir les MBS sur la seconde fréquence porteuse.

9. Procédé selon la revendication 1, dans lequel :
le second nœud est la DU de la seconde station de base distribuée (106B) ; et
l'UE (102) est reconfiguré pour recevoir des MBS et fonctionner en double connectivité, DC, avec la première station de base distribuée (106A) et la seconde station de base distribuée (106B) conformément à la seconde reconfiguration.

10. Nœud RAN comprenant un matériel de traitement et configuré pour mettre en œuvre le procédé selon l'une quelconque des revendications précédentes.

11. Procédé réalisé par un équipement utilisateur, UE (102), configuré pour recevoir des informations de diffusion individuelle d'un réseau d'accès radio, RAN (105), le procédé étant **caractérisé en ce qu'**il comprend :
la transmission (1602), par l'UE (102) et à un premier nœud de réseau qui fonctionne dans le RAN et qui est une unité centrale, CU (172), d'une première station de base distribuée (106A), d'une indication selon laquelle l'UE tente de recevoir des services de multidiffusion et de diffusion, MBS, du RAN (105) ;
la réception (1604), par l'UE (102) et d'un second nœud de réseau fonctionnant dans le RAN (105) et qui est une unité distribuée, DU (174), de la première station de base distribuée (106A) ou d'une seconde station de base distribuée (106B), d'une reconfiguration générée en vue de l'indication ; et
la réception (1606), par l'UE (102), des informations de diffusion individuelle et MBS selon la reconfiguration.

12. Procédé selon la revendication 11, dans lequel le second nœud de réseau est la DU (174) de la première station de base distribuée (106A).

13. Procédé selon la revendication 11, dans lequel le second nœud de réseau est la DU de la seconde station de base distribuée (106B).

14. Procédé selon l'une quelconque des revendications 11 à 13, dans lequel :
le premier nœud du réseau fonctionne comme un MN, et
le second nœud de réseau fonctionne comme un SN, pour fournir une double connectivité, DC, à l'UE.

15. UE comprenant un matériel de traitement et configuré pour mettre en œuvre le procédé selon l'une quelconque des revendications 11 à 14.
